(19) Europäisches Patentamt / European Patent Office / Office européen des brevets

(11) **EP 4 783 692 A1**

(12) **EUROPEAN PATENT APPLICATION**
published in accordance with Art. 153(4) EPC

(43) Date of publication:
**29.07.2026 Bulletin 2026/31**

(21) Application number: **23952481.2**

(22) Date of filing: **18.09.2023**

(51) International Patent Classification (IPC):
***H04W 72/0446*** *(2023.01)*

(52) Cooperative Patent Classification (CPC):
**H04W 72/0446**

(86) International application number:
**PCT/CN2023/119501**

(87) International publication number:
**WO 2025/059815 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **LIN, Yanan**
  **Dongguan, Guangdong 523860 (KR)**
• **XU, Jing**
  **Dongguan, Guangdong 523860 (KR)**

(74) Representative: **Taor, Simon Edward William et al**
**Venner Shipley LLP**
**TIDE Bankside**
**8 Emerson Street**
**London SE1 9DU (GB)**

(54) **RESOURCE INDICATION METHOD AND APPARATUS, DEVICE, AND STORAGE MEDIUM**

(57)    A resource indication method and apparatus, a device, and a storage medium, relating to the technical field of communications. The method comprises: a first device sends first information, wherein the first information is used to indicate the usage situation of N resource parts comprised in a first transmission resource among M transmission resources, N being an integer greater than 1, M being an integer greater than or equal to 1, and the first transmission resource being configured to transmit a first channel. Dividing a transmission resource in finer granularity allows the transmission resource to comprise a plurality of resource parts, wherein each resource part comprises a part of the resources in the transmission resource, thus achieving a more granular indication of the resource usage situation and improving the resource utilization rate.

A first device sends first information, the first information is used to indicate the usage of N resource parts included in a first transmission resource among M transmission resources, where N is an integer greater than 1, M is an integer greater than or equal to 1, and the first transmission resource is configured for transmitting a first channel

210

**FIG. 2**

EP 4 783 692 A1

**Description**

TECHNICAL FIELD

Embodiments of the present disclosure relate to the field of communication technologies, and particularly, to a method for resource indication, apparatus, device, and storage medium.

BACKGROUND

In communication systems, a terminal device can send uplink information to a network device, indicating the usage situation of the uplink transmission resources that the terminal device uses.

However, current indications of resource usage situation are simply based on relatively coarse granularity, which can easily lead to resource waste in a communication system.

SUMMARY

Embodiments of the present disclosure provide a method for resource indication, apparatus, device, and storage medium. The technical solutions provided by the embodiments of the present disclosure are as follows.

According to an aspect of the embodiments of the present disclosure, a method for resource indication is provided. The method is performed by a first device and includes:

sending first information, wherein the first information is used to indicate usage situation of N resource parts included in a first transmission resource among M transmission resources, N is an integer greater than 1, M is an integer greater than or equal to 1, and the first transmission resource is configured for transmitting a first channel.

According to an aspect of the embodiments of the present disclosure, a device for resource indication is provided. The device is arranged in a first device and includes:

a sending module, configured to send first information, wherein the first information is used to indicate t usage situation of N resource parts included in a first transmission resource among M transmission resources, N is an integer greater than 1, M is an integer greater than or equal to 1, and the first transmission resource is configured for transmitting a first channel.

According to an aspect of the embodiments of the present disclosure, a device is provided. The device includes a processor and a memory, wherein computer programs are stored in the memory, and the processor executes the computer programs to implement the aforementioned method for resource indication.

According to an aspect of the embodiments of the present disclosure, a computer-readable storage medium is provided. A computer program is stored in the storage medium, and the computer program is configured to be executed by a processor to implement the aforementioned method for resource indication.

According to an aspect of the embodiments of the present disclosure, a chip is provided. The chip includes programmable logic circuits and/or program instructions, that when the chip runs, are used to implement the aforementioned method for resource indication.

According to an aspect of the embodiments of the present disclosure, a computer program product is provided. The computer program product includes computer instructions stored in a computer-readable storage medium. A processor reads the computer instructions from the computer-readable storage medium and executes the computer instructions to implement the aforementioned method for resource indication.

The technical solutions provided by the embodiments of the present disclosure may include the following beneficial effects:

By using the first information to indicate the usage situation of the N resource parts included in the first transmission resource among the M transmission resources, the transmission resource is divided into finer granularity. The transmission resource can include multiple resource parts, and each resource part includes a portion of the resources in the transmission resource, thereby achieving a finer-grained indication of resource usage, which helps to improve resource utilization.

DESCRIPTION OF THE DRAWINGS

FIG. 1 is a schematic diagram of a network architecture provided by an embodiment of the present disclosure;
FIG. 2 is a flowchart of a method for resource indication provided by an embodiment of the present disclosure;
FIG. 3 is a schematic diagram of dividing a transmission resource in a time-domain division manner provided by an embodiment of the present disclosure;

FIG. 4 is a schematic diagram of dividing a transmission resource in a frequency-domain division manner provided by an embodiment of the present disclosure;

FIG. 5 is a schematic diagram of dividing a transmission resource in a time-frequency domain division manner provided by an embodiment of the present disclosure;

FIG. 6 is a schematic diagram of a base station pre-configuring 4 TOs (Transmission Occasions) provided by an embodiment of the present disclosure;

FIG. 7 is a schematic diagram of a downlink data transmission procedure provided by an embodiment of the present disclosure;

FIG. 8 is a schematic diagram of an uplink data transmission procedure provided by an embodiment of the present disclosure;

FIG. 9 is a schematic diagram of a downlink/uplink data transmission procedure provided by another embodiment of the present disclosure;

FIG. 10 is a block diagram of a device for resource indication provided by an embodiment of the present disclosure;

FIG. 11 is a schematic structural diagram of a device provided by an embodiment of the present disclosure.

DETAILED DESCRIPTION

To make the objectives, technical solutions, and advantages of the present disclosure clearer, the implementations of the present disclosure will be further described in detail below with reference to the accompanying drawings.

The network architecture and service scenarios described in the embodiments of the present disclosure are intended to illustrate the technical solutions of the embodiments of the present disclosure more clearly, and do not constitute a limitation on the technical solutions provided by the embodiments of the present disclosure. Those of ordinary skill in the art will appreciate that the technical solutions provided by the embodiments of the present disclosure are equally applicable to similar technical problems as the network architecture evolves and new service scenarios emerge.

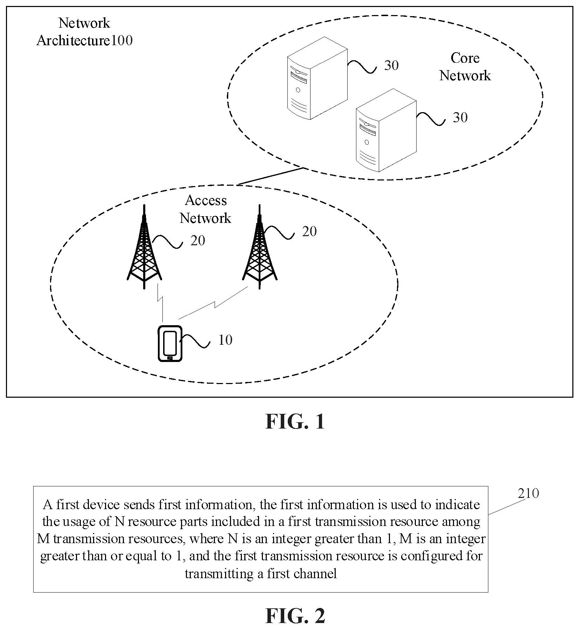

Reference is made to FIG. 1, which shows a schematic diagram of a network architecture 100 provided by an embodiment of the present disclosure. The network architecture 100 may include: a terminal device 10, an access network device 20, and a core network element 30.

The terminal device 10 may refer to UE (User Equipment), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, an SIP (Session Initiation Protocol) phone, a WLL (Wireless Local Loop) station, a PDA (Personal Digital Assistant), a handheld device with wireless communication functionality, a computing device, or other processing devices connected to a wireless modem, an in-vehicle device, a wearable device, a terminal device in a 5GS (5th Generation System), or a terminal device in a future evolved PLMN (Public Land Mobile Network), etc. The embodiments of the present disclosure do not limit this. For convenience of description, the devices mentioned above are collectively referred to as terminal devices. The number of terminal devices 10 is usually plural, and one or more terminal devices 10 may be distributed in a cell managed by each access network device 20. The terminal device may also be referred to as a terminal or UE, and those skilled in the art can understand its meaning.

The access network device 20 is a device deployed in an access network to provide wireless communication functions for the terminal device 10. The access network device 20 may include various forms of macro base stations, micro base stations, relay stations, access points, etc. In systems using different wireless access technologies, the name of the device having the functions of the access network device may be different. For example, in a 5G NR system, it is called a gNodeB or gNB. As communication technology evolves, the name "access network device" may change. For convenience of description, in the embodiments of the present disclosure, the aforementioned apparatuses providing wireless communication functions for the terminal device 10 are collectively referred to as access network devices. In some embodiments, a communication relationship can be established between the terminal device 10 and the core network element 30 through the access network device 20. For example, in an LTE (Long Term Evolution) system, the access network device 20 may be an EUTRAN (Evolved Universal Terrestrial Radio Access Network) or one or more eNodeBs in an EUTRAN; in a 5G NR system, the access network device 20 may be a RAN (Radio Access Network) or one or more gNBs in a RAN. In the embodiments of the present disclosure, the "network device", unless otherwise specified, refers to the access network device 20, such as a base station.

The core network element 30 is an element deployed in the core network. The function of the core network element 30 is mainly to provide user connection, manage users, and complete bearer services, serving as a bearer network to provide interfaces to external networks. For example, core network elements in a 5G NR system may include an AMF (Access and Mobility Management Function) entity, a UPF (User Plane Function) entity, an SMF (Session Management Function) entity, and other network elements.

In some embodiments, the access network device 20 and the core network element 30 communicate with each other through a certain air interface technology, such as the NG interface in a 5G NR system. The access network device 20 and the terminal device 10 communicate with each other through a certain air interface technology, such as the Uu interface.

The "5G NR system" in the embodiments of the present disclosure may also be referred to as a 5G system or an NR system, but those skilled in the art can understand its meaning. The technical solutions described in the embodiments of the present disclosure may be applicable to LTE systems, 5G NR systems, subsequent evolved systems of 5G NR systems (e.g., B5G (Beyond 5G) systems, 6G systems (6th Generation System)), and may also be applicable to other communication systems such as NB-IoT (Narrow Band Internet of Things) systems, which is not limited in the present disclosure.

In the embodiments of the present disclosure, a network device may provide services for a cell. A terminal device communicates with the network device using transmission resources (e.g., frequency domain resources, or spectrum resources) on a carrier used by the cell. The cell may be a cell corresponding to a network device (e.g., a base station). The cell may belong to a macro base station, or may belong to a base station corresponding to a small cell. The small cell here may include: a Metro cell, a Micro cell, a Pico cell, a Femto cell, etc. These small cells have the characteristics of small coverage range and low transmission power, and are suitable for providing high-speed data transmission services.

Reference is made to FIG. 2, which shows a flowchart of a method for resource indication provided by an embodiment of the present disclosure. The execution subject of each step of the method may be a first device. The method may include the following step 210.

Step 210: a first device sends first information. The first information is used to indicate usage situation of N resource parts included in a first transmission resource among M transmission resources. N is an integer greater than 1, M is an integer greater than or equal to 1, and the first transmission resource is configured for transmitting a first channel.

In some embodiments, a transmission resource is a time-frequency resource used for transmitting a channel or signal. Each transmission resource occupies a certain duration in the time domain and a certain frequency band in the frequency domain.

In some embodiments, the M transmission resources are periodic resources configured by a network device through first signaling. The first signaling may be any signaling used to configure the aforementioned M transmission resources. In some embodiments, the first signaling is higher layer signaling, such as RRC (Radio Resource Control) signaling. In some embodiments, the network device configures the time-frequency domain position of the first transmission resource among the M transmission resources and the time interval in the time domain between two adjacent transmission resources through the first signaling. Based on the information configured by the first signaling, a set of periodic resources can be determined. This set of periodic resources includes M transmission resources.

In some embodiments, the M transmission resources are resources indicated by a network device through second signaling. The second signaling may be any signaling used to indicate the aforementioned M transmission resources. In some embodiments, the second signaling is DCI (Downlink Control Information). In some embodiments, the network device indicates the M transmission resources through DCI.

In some embodiments, the M transmission resources are after the transmission resource in which the first information is located. "After" here refers to the time domain. For example, the start position in the time domain of the M transmission resources is after the end position in the time domain of the transmission resource in which the first information is located, or is not earlier than the end position in the time domain of the transmission resource in which the first information is located.

In some embodiments, a second device receives the aforementioned first information.

In some embodiments, the first device is a terminal device, and the M transmission resources are uplink transmission resources. The terminal device indicates the usage situation of its uplink transmission resources by sending the first information. For example, the first device is a terminal device, the second device is a network device, the terminal device sends the first information to the network device, and the network device receives the first information. Based on the first information, the network device can learn the usage situation of the uplink transmission resources of the terminal device.

In some embodiments, the first device is a network device, and the M transmission resources are downlink transmission resources. The network device indicates the usage situation of its downlink transmission resources by sending the first information. For example, the first device is a network device, the second device is a terminal device, the network device sends the first information to the terminal device, and the terminal device receives the first information. Based on the first information, the terminal device can learn the usage situation of the downlink transmission resources of the network device.

In some embodiments, the first transmission resource is configured for transmitting a first channel. The first channel may be an uplink channel or a downlink channel. For example, when the M transmission resources are uplink transmission resources, the first channel is an uplink channel. For example, the first channel may be a PUSCH (Physical Uplink Shared Channel). For example, when the M transmission resources are downlink transmission resources, the first channel is a downlink channel. For example, the first channel may be a PDSCH (Physical Downlink Shared Channel).

In some embodiments, the first transmission resource may be one of the M transmission resources. In the embodiments of the present disclosure, in order to achieve a finer-grained indication of resource usage, the transmission resource is divided into finer granularity. The transmission resource may include multiple resource parts, and each resource part includes a portion of the resources in the transmission resource. For the same transmission resource, the multiple resource parts it includes may have the same size or different sizes.

Hereafter, the division of resource parts is introduced and explained using the first transmission resource as an example. For any transmission resource among the M transmission resources, the resource parts can be divided in the same or a similar manner.

In some embodiments, the first transmission resource is divided into P time domain units in the time domain and Q frequency domain units in the frequency domain, where P and Q are both positive integers. Here, a time domain unit refers to the minimum division unit of the transmission resource in the time domain. For example, the time domain unit may be, but is not limited to, a symbol (e.g., an OFDM (Orthogonal Frequency Division Multiplexing) symbol), a subslot, a slot, a subframe, etc. A frequency domain unit refers to the minimum division unit of the transmission resource in the frequency domain. For example, the frequency domain unit may be, but is not limited to, an RB (Resource Block), an RBG (Resource Block Group), a subband, etc.

In some embodiments, a time-domain division manner is adopted. For any resource part included in the first transmission resource, it includes part of the P time domain units in the time domain and includes the Q frequency domain units in the frequency domain. Each resource part includes part of the time domain units of the first transmission resource in the time domain and includes all frequency domain units of the first transmission resource in the frequency domain. The aforementioned part of the time domain units may be continuous in the time domain or non-continuous (e.g., in a comb-like structure).

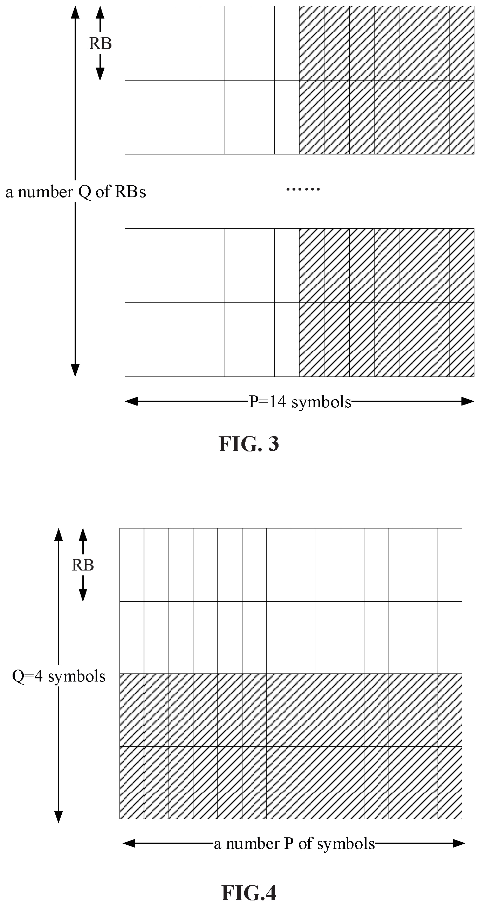

For example, as shown in FIG. 3, a schematic diagram of dividing a transmission resource in a time-domain division manner is shown. Taking N=2, the time domain unit as a symbol, and the frequency domain unit as an RB as an example. It is assumed that the first transmission resource includes P=14 symbols in the time domain and Q RBs in the frequency domain. The aforementioned 14 symbols are numbered 0 to 13 sequentially. The first transmission resource includes 2 resource parts. The first resource part occupies 7 symbols numbered 0 to 6 in the time domain and Q RBs in the frequency domain; the second resource part occupies 7 symbols numbered 7 to 13 in the time domain and Q RBs in the frequency domain.

The aforementioned part of the time domain units may be divided according to an agreed rule. In some embodiments, for the case where the resource part includes part of the P time domain units in the time domain, the number of time domain units included in the resource part is determined based on P and N. For example, the number of time domain units included in the resource part is determined based on $\frac{P}{N}$. In some embodiments, in the case where the resource part includes part of the P time domain units in the time domain, among the N resource parts, there are C resource parts including $\left\lceil \frac{P}{N} \right\rceil$ time domain units in the time domain, and N-C resource portions including $\left\lfloor \frac{P}{N} \right\rfloor$ time domain units in the time domain, C = mod(P, N). Here, $\left\lceil \frac{P}{N} \right\rceil$ represents upward rounding of $\frac{P}{N}$, and $\left\lfloor \frac{P}{N} \right\rfloor$ represents downward rounding of $\frac{P}{N}$, mod is a modulo operation. In some embodiments, the time domain positions of the C resource parts are ahead of the N-C resource parts, that is, the time domain positions of the resource parts including more time domain units are ahead. With the aforementioned time-domain division manner, it can be ensured that the number of time domain units included in each resource part is as uniform as possible, and the division is according to an agreed rule, without requiring additional signaling.

The aforementioned part of the time domain units may also be configured by the network device. In some embodiments, the network device configures the time domain units included in each resource part through higher layer signaling (e.g., RRC signaling). This manner provides more flexible division of the transmission resource, enabling continuous or non-continuous time-domain division, and uniform or non-uniform time-domain division.

In some embodiments, a frequency-domain division manner is adopted. For any resource part included in the first transmission resource, it includes the P time domain units in the time domain and includes part of the Q frequency domain units in the frequency domain. Each resource part includes all time domain units of the first transmission resource in the time domain and includes part of the frequency domain units of the first transmission resource in the frequency domain. The aforementioned part of the frequency domain units may be continuous in the frequency domain or non-continuous (e.g., in a comb-like structure).

For example, as shown in FIG. 4, a schematic diagram of dividing a transmission resource in a frequency-domain division manner is shown. Taking N=2, the time domain unit as a symbol, and the frequency domain unit as an RB as an example. It is assumed that the first transmission resource includes P symbols in the time domain and Q=4 RBs in the frequency domain. The aforementioned 4 RBs are numbered 0 to 3 sequentially. The first transmission resource includes 2 resource parts. The first resource part occupies P symbols in the time domain and 2 RBs numbered 0 to 1 in the frequency domain; the second resource part occupies P symbols in the time domain and 2 RBs numbered 2 to 3 in the frequency domain.

The aforementioned part of the frequency domain units may be divided according to an agreed rule. In some embodiments, for the case where the resource part includes part of the Q frequency domain units in the frequency domain, the number of frequency domain units included in the resource part is determined based on Q and N. For example, the number of frequency domain units included in the resource part is determined according to $\frac{Q}{N}$. In some embodiments, in the case where the resource part includes some frequency domain units of the Q frequency domain units in the frequency domain, among the N resource parts, there are D resource parts including $\left\lceil \frac{Q}{N} \right\rceil$ frequency domain units in the frequency domain, and N-D resource parts including $\left\lfloor \frac{Q}{N} \right\rfloor$ frequency domain units in the frequency domain D = modeQ, N). Here, $\left\lceil \frac{Q}{N} \right\rceil$ represents upward rounding of $\frac{Q}{N}$, and $\left\lfloor \frac{Q}{N} \right\rfloor$ represents downward rounding of $\frac{Q}{N}$, and mod is a modulo operation. In some embodiments, the frequency domain positions of the D resource parts are ahead of the N-D resource parts, that is, the frequency domain positions of the resource parts including many frequency domain units are ahead. By adopting the above-described frequency domain division method, it is possible to ensure that the number of frequency domain units included in each resource part is as uniform as possible, and it is divided according to the agreed rule, and no additional signaling is required.

The aforementioned part of the frequency domain units may also be configured by the network device. In some embodiments, the network device configures the frequency domain units included in each resource part through higher layer signaling (e.g., RRC signaling). This manner provides more flexible division of the transmission resource, enabling continuous or non-continuous frequency-domain division, and uniform or non-uniform frequency-domain division.

In some embodiments, a time-frequency domain division manner is adopted. For any resource part included in the first transmission resource, it includes part of the P time domain units in the time domain and includes part of the Q frequency domain units in the frequency domain. Each resource part includes part of the time domain units of the first transmission resource in the time domain and includes part of the frequency domain units of the first transmission resource in the frequency domain. The aforementioned part of the time domain units may be continuous in the time domain or non-continuous (e.g., in a comb-like structure). The aforementioned part of the frequency domain units may be continuous in the frequency domain or non-continuous (e.g., in a comb-like structure).

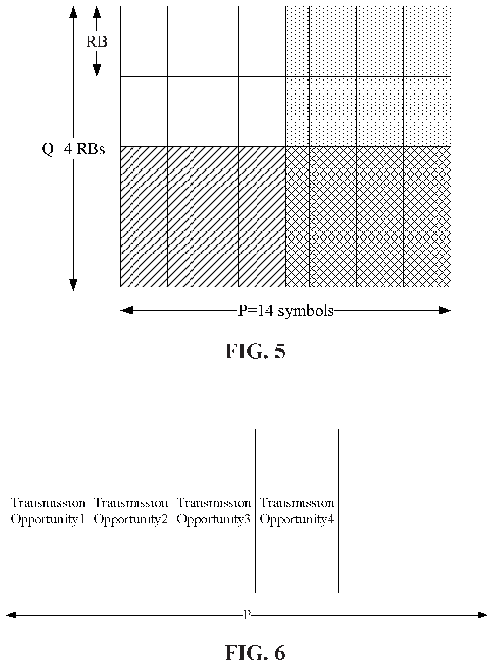

For example, as shown in FIG. 5, a schematic diagram of dividing a transmission resource in a time-frequency domain division manner is shown. Taking N=4, the time domain unit as a symbol, and the frequency domain unit as an RB as an example. It is assumed that the first transmission resource includes P=14 symbols in the time domain and Q=4 RBs in the frequency domain. The aforementioned 14 symbols are numbered 0 to 13 sequentially, and The 4 RBs are numbered 0 to 3 sequentially. The first transmission resource includes 4 resource parts. The first resource part occupies 7 symbols numbered 0 to 6 in the time domain and 2 RBs numbered 0 to 1 in the frequency domain; the second resource part occupies 7 symbols numbered 0 to 6 in the time domain and 2 RBs numbered 2 to 3 in the frequency domain; the third resource part occupies 7 symbols numbered 7 to 13 in the time domain and 2 RBs numbered 0 to 1 in the frequency domain; the fourth resource part occupies 7 symbols numbered 7 to 13 in the time domain and 2 RBs numbered 2 to 3 in the frequency domain.

The aforementioned part of the time domain units and/or part of the frequency domain units may be divided according to an agreed rule. Specific division methods can be referred to the introduction and explanation above, which will not be repeated here. Using the aforementioned division method according to an agreed rule ensures that the number of time domain units and/or frequency domain units included in each resource part is as uniform as possible, and the division is according to an agreed rule, without requiring additional signaling.

The aforementioned part of the time domain units and/or part of the frequency domain units may also be configured by the network device. In some embodiments, the network device configures the time domain units and/or frequency domain units included in each resource part through higher layer signaling (e.g., RRC signaling). This manner provides more flexible division of the transmission resource, enabling continuous or non-continuous time-domain and/or frequency-domain division, and uniform or non-uniform time-domain and/or frequency-domain division.

In some embodiments, the first information includes M groups of second information. There are one-to-one correspondences between the M groups of second information and the M transmission resources. Each group of second information among the M groups of second information is used to indicate the usage situation of one transmission resource among the M transmission resources. Each group of second information among the M groups of second information corresponds to one transmission resource among the aforementioned M transmission resources and is used to indicate the usage situation of that one transmission resource. For example, the i-th group of second information among the M groups of second information corresponds to the i-th transmission resource among the aforementioned M transmission resources. The i-th group of second information is used to indicate the usage situation of the i-th transmission resource, where i is a positive integer less than or equal to M.

Taking the first transmission resource among the M transmission resources as an example, the group of second information corresponding to the first transmission resource among the M groups of second information is used to indicate the usage situation of the first transmission resource. In some embodiments, the usage situation of the first transmission resource may include the usage situation of the N resource parts included in the first transmission resource. The usage situation of each resource part may be "not used" or "unavailable" or "reserved", or may be "used" or "available".

Below, several possible implementations of the second information are explained.

Method 1.1: The group of second information corresponding to the first transmission resource among the M groups of second information includes N bits. There are one-to-one correspondences between the N bits and the N resource parts. Each bit among the N bits is used to indicate the usage situation of one resource part among the N resource parts.

This indication method of using N bits to indicate the usage situation of N resource parts can be called a bitmap indication method. Each of the N bits corresponds to one resource part among the aforementioned N resource parts and is used to indicate the usage situation of that one resource part. For example, the j-th bit among the N bits corresponds to the j-th resource part among the aforementioned N resource parts. The j-th bit is used to indicate the usage situation of the j-th resource part, where j is a positive integer less than or equal to N. In some embodiments, the usage situation of the j-th resource part may be that the j-th resource part is not used or unavailable or reserved, or that the j-th resource part is used or available.

In some embodiments, for each bit among the aforementioned N bits, when its value is a first value, it indicates that the resource part corresponding to this bit is not used or unavailable or reserved; when its value is a second value, it indicates that the resource part corresponding to this bit is used or available. The aforementioned first value and second value can be two different values. For example, the first value is 1 and the second value is 0, or the first value is 0 and the second value is 1.

Exemplarily, taking the first value as 1 to indicate that the resource part is not used or unavailable or reserved, and the second value as 0 to indicate that the resource part is used or available as an example. It is assumed that the first transmission resource includes 4 resource parts, and the second information corresponding to the first transmission resource includes 4 bits, such as 0111, indicating that the usage situation of the first resource part included in the first transmission resource is used or available, and the usage situation of the 2nd to 4th resource parts is not used or unavailable or reserved. or such as 0101, indicating that the usage situation of the first and third resource parts included in the first transmission resource is used or available, and the usage situation of the second and fourth resource parts is not used or unavailable or reserved.

The aforementioned bitmap indication method is adopted to indicate the usage situation of resource parts has high flexibility, but the bit overhead of the signaling is relatively large.

Method 1.2: The group of second information corresponding to the first transmission resource among the M groups of second information includes L bits. The L bits are used to indicate $2^L$ types of usage situations regarding the N resource parts, where L is a positive integer.

In some embodiments, for the $2^L$ types of usage situations regarding the N resource parts, each type of usage situation regarding the N resource parts has a corresponding index. The aforementioned L bits can be used to indicate the index of a certain type of usage situation regarding the N resource parts.

In some embodiments, each type of usage situation regarding the N resource parts and its corresponding index may be pre-configured by the network device or agreed by protocol. It is assumed that the first transmission resource includes 4 resource parts, and the second information corresponding to the first transmission resource includes 3 bits. The 3 bits can indicate up to $2^3=8$ types of usage situations regarding these 4 resource parts. Exemplarily, the correspondence can be as shown in Table 1 below:

Table 1

| Index | Usage situation regarding the 4 resource parts |
|---|---|
| 000 | All 4 resource parts are not used or unavailable or reserved |
| 001 | The 1st resource part is used or available, the 2nd to 4th resource parts are not used or unavailable or reserved |
| 010 | The 1st to 2nd resource parts are used or available, the 3rd to 4th resource parts are not used or unavailable or reserved |
| 011 | The 1st to 3rd resource parts are used or available, the 4th resource part is not used or unavailable or reserved |

(continued)

| Index | Usage situation regarding the 4 resource parts |
|---|---|
| 100 | All 4 resource parts are used or available |
| 101 | The 1st and 3rd resource parts are used or available, the 2nd and 4th resource parts are not used or unavailable or reserved |
| 110 | The 2nd and 4th resource parts are used or available, the 1st and 3rd resource parts are not used or unavailable or reserved |
| 111 | The 1st and 4th resource parts are used or available, the 2nd and 3rd resource parts are not used or unavailable or reserved |

Referring to Table 1 above, when the second information corresponding to the first transmission resource is index 000, it indicates that all 4 resource parts included in the first transmission resource are not used or unavailable or reserved; when the second information corresponding to the first transmission resource is index 001, it indicates that the 1st resource part included in the first transmission resource is used or available, and the 2nd to 4th resource parts are not used or unavailable or reserved; and so on.

The aforementioned index-based indication method is adopted to indicate the usage situation of resource parts can support non-contiguous indications. The flexibility is somewhat limited compared to Method 1.1 above, but the bit overhead can be somewhat saved compared to Method 1.1 above.

Method 1.3: The group of second information corresponding to the first transmission resource among the M groups of second information indicates a starting resource part. From this starting resource part to the ending resource part of the N resource parts, all are not used or unavailable or reserved.

The starting resource part indicated by the second information can be any resource part among the N resource parts included in the first transmission resource. The ending resource part of the N resource parts refers to the last resource part among the N resource parts. Using this Method 1.3 indication method can indicate that the usage situation of consecutive resource parts starting from the starting resource part is all "not used or unavailable or reserved".

It is assumed that the first transmission resource includes 4 resource parts. If the second information corresponding to the first transmission resource indicates the starting resource part as the 1st resource part, it means that all 4 resource parts are not used or unavailable or reserved. or if the second information corresponding to the first transmission resource indicates the starting resource part as the 2nd resource part, it means that the usage situation of the 2nd to 4th resource parts among the 4 resource parts is all "not used or unavailable or reserved".

Method 1.4: The group of second information corresponding to the first transmission resource among the M groups of second information indicates a starting resource part. From this starting resource part to the ending resource part of the N resource parts, all are used or available.

The starting resource part indicated by the second information can be any resource part among the N resource parts included in the first transmission resource. The ending resource part of the N resource parts refers to the last resource part among the N resource parts. Using this Method 1.4 indication method can indicate that the usage situation of consecutive resource parts starting from the starting resource part is all "used or available".

It is assumed that the first transmission resource includes 4 resource parts. If the second information corresponding to the first transmission resource indicates the starting resource part as the 1st resource part, it means that all 4 resource parts are used or available. or if the second information corresponding to the first transmission resource indicates the starting resource part as the 2nd resource part, it means that the usage situation of the 2nd to 4th resource parts among the 4 resource parts is all "used or available".

Method 1.5: The group of second information corresponding to the first transmission resource among the M groups of second information indicates a starting resource part and an ending resource part. The resource parts included from this starting resource part to this ending resource part are all not used or unavailable or reserved.

The starting resource part indicated by the second information can be any resource part among the N resource parts included in the first transmission resource. The ending resource part indicated by the second information can be any resource part among the N resource parts included in the first transmission resource. Additionally, the second information may directly indicate the position of the ending resource part, or it may indicate the duration (or quantity) of consecutive resource parts, so that the ending resource part can be determined by combining the starting resource part and this duration. Using this Method 1.5 indication method can indicate that the usage situation of consecutive resource parts from the starting resource part to the ending resource part is all "not used or unavailable or reserved".

It is assumed that the first transmission resource includes 4 resource parts. If the second information corresponding to the first transmission resource indicates the starting resource part as the 1st resource part and the ending resource part as the 4th resource part, it means that all 4 resource parts are not used or unavailable or reserved. or if the second information corresponding to the first transmission resource indicates the starting resource part as the 2nd resource part and the ending resource part as the 3rd resource part, it means that the usage situation of the 2nd to 3rd resource parts among the 4 resource parts is "not used or unavailable or reserved", while the usage situation of the 1st and 4th resource parts is "used or available".

Method 1.6: The group of second information corresponding to the first transmission resource among the M groups of second information indicates a starting resource part and an ending resource part. The resource parts included from this starting resource part to this ending resource part are all used or available.

The starting resource part indicated by the second information can be any resource part among the N resource parts included in the first transmission resource. The ending resource part indicated by the second information can be any resource part among the N resource parts included in the first transmission resource. Additionally, the second information may directly indicate the position of the ending resource part, or it may indicate the duration (or quantity) of consecutive resource parts, so that the ending resource part can be determined by combining the starting resource part and this duration. Using this Method 1.6 indication method can indicate that the usage situation of consecutive resource parts from the starting resource part to the ending resource part is all "used or available".

It is assumed that the first transmission resource includes 4 resource parts. If the second information corresponding to the first transmission resource indicates the starting resource part as the 1st resource part and the ending resource part as the 4th resource part, it means that all 4 resource parts are used or available. or if the second information corresponding to the first transmission resource indicates the starting resource part as the 2nd resource part and the ending resource part as the 3rd resource part, it means that the usage situation of the 2nd to 3rd resource parts among the 4 resource parts is "used or available", while the usage situation of the 1st and 4th resource parts is "not used or unavailable or reserved".

In some embodiments, the first information includes a first part and a second part. The first part is used to indicate the usage situation of the M transmission resources. The second part is used to indicate the usage situation of the N resource parts included in the first transmission resource. The first transmission resource is indicated as not used or unavailable or reserved in the first part.

The usage situation of a transmission resource may be that there are resource parts in this transmission resource that are not used or unavailable or reserved (i.e., this transmission resource is not used or unavailable or reserved), or that there are no resource parts in this transmission resource that are not used or unavailable or reserved (i.e., this transmission resource is used or available). The usage situation of a resource part may be that this resource part is not used or unavailable or reserved, or that this resource part is used or available. The first part in the aforementioned first information is used to indicate the usage situation of the M transmission resources. The second part is used to indicate the usage situation of the resource parts included in the transmission resource(s) among the M transmission resources that have resource parts that are not used or unavailable or reserved (in this embodiment, we call it the "first transmission resource"). The number of first transmission resources may be one or multiple, as described in the following embodiments.

Below, several possible implementations of the first part are explained.

Method 2.1: The first part includes M bits. There are one-to-one correspondences between the M bits and the M transmission resources. Each bit among the M bits is used to indicate the usage situation of one transmission resource among the M transmission resources.

Each bit among the M bits corresponds to one transmission resource among the aforementioned M transmission resources and is used to indicate the usage situation of that one transmission resource.

In some embodiments, for each bit among the aforementioned M bits, when its value is a third value, it indicates that there are resource parts in the transmission resource corresponding to this bit that are not used or unavailable or reserved; when its value is a fourth value, it indicates that there are no resource parts in the transmission resource corresponding to this bit that are not used or unavailable or reserved. The aforementioned third value and fourth value can be two different values. For example, the third value is 1 and the fourth value is 0, or the third value is 0 and the fourth value is 1.

Exemplarily, taking the third value as 1 to indicate that there are resource parts in the transmission resource that are not used or unavailable or reserved, and the fourth value as 0 to indicate that there are no resource parts in the transmission resource that are not used or unavailable or reserved as an example. It is assumed that M=6, the first part includes 6 bits, such as 001111, indicating that there are no resource parts that are not used or unavailable or reserved in the 1st and 2nd transmission resources, and there are resource parts that are not used or unavailable or reserved in the 3rd to 6th transmission resources. or such as 010111, indicating that there are no resource parts that are not used or unavailable or reserved in the 1st and 3rd transmission resources, and there are resource parts that are not used or unavailable or reserved in the 2nd and 4th to 6th transmission resources.

Using the aforementioned bitmap indication method to indicate the usage situation of transmission resources has high flexibility, but the bit overhead of the signaling is relatively large.

Method 2.2: The first part includes K bits. The K bits are used to indicate $2^K$ types of usage situations regarding the M transmission resources, where K is a positive integer.

In some embodiments, for the $2^K$ types of usage situations regarding the M transmission resources, each type of usage situation regarding the M transmission resources has a corresponding index. The aforementioned K bits can be used to indicate the index of a certain type of usage situation regarding the M transmission resources.

In some embodiments, each type of usage situation regarding the M transmission resources and its corresponding index may be pre-configured by the network device or agreed by protocol. It is assumed that M=4, including 4 transmission resources in total. The first part includes 2 bits. The 2 bits can indicate up to $2^2=4$ types of usage situations regarding these 4 transmission resources. Exemplarily, the correspondence can be as shown in Table 2 below:

Table 2

| Index | Usage situation regarding these 4 transmission resources |
|---|---|
| 00 | None of the 4 transmission resources have resource parts that are not used or unavailable or reserved |
| 01 | The 1st transmission resource has no resource parts that are not used or unavailable or reserved; the 2nd to 4th transmission resources have resource parts that are not used or unavailable or reserved |
| 10 | The 1st to 2nd transmission resources have no resource parts that are not used or unavailable or reserved; the 3rd to 4th transmission resources have resource parts that are not used or unavailable or reserved |
| 11 | The 1st to 3rd transmission resources have no resource parts that are not used or unavailable or reserved; the 4th transmission resource has resource parts that are not used or unavailable or reserved |

Referring to Table 2 above, when the first part is index 00, it indicates that none of the 4 transmission resources have resource parts that are not used or unavailable or reserved; when the first part is index 01, it indicates that the 1st transmission resource has no resource parts that are not used or unavailable or reserved, and the 2nd to 4th transmission resources have resource parts that are not used or unavailable or reserved; and so on.

Using the aforementioned index-based indication method to indicate the usage situation of transmission resources can support non-contiguous indications. The flexibility is somewhat limited compared to Method 2.1 above, but the bit overhead can be somewhat saved compared to Method 2.1 above.

Method 2.3: The first part indicates a starting transmission resource. From this starting transmission resource to the ending transmission resource of the M transmission resources, all are not used or unavailable or reserved.

The starting transmission resource indicated by the first part can be any transmission resource among the M transmission resources. The ending transmission resource of the M transmission resources refers to the last transmission resource among the M transmission resources. Using this Method 2.3 indication method can indicate that the usage situation of consecutive transmission resources starting from the starting transmission resource is all "not used or unavailable or reserved", i.e., there are resource parts that are not used or unavailable or reserved.

It is assumed that M=4, including 4 transmission resources in total. If the first part indicates the starting transmission resource as the 1st transmission resource, it means that the usage situation of all 4 transmission resources is "not used or unavailable or reserved". or if the first part indicates the starting transmission resource as the 2nd transmission resource, it means that the usage situation of the 2nd to 4th transmission resources among the 4 transmission resources is "not used or unavailable or reserved", while the usage situation of the 1st transmission resource is "used or available".

Method 2.4: The first part indicates a starting transmission resource. From this starting transmission resource to the ending transmission resource of the M transmission resources, all are used or available.

The starting transmission resource indicated by the first part can be any transmission resource among the M transmission resources. The ending transmission resource of the M transmission resources refers to the last transmission resource among the M transmission resources. Using this Method 2.4 indication method can indicate that the usage situation of consecutive transmission resources starting from the starting transmission resource is all "used or available", i.e., there are no resource parts that are not used or unavailable or reserved.

It is assumed that M=4, including 4 transmission resources in total. If the first part indicates the starting transmission resource as the 1st transmission resource, it means that the usage situation of all 4 transmission resources is "used or available". or if the first part indicates the starting transmission resource as the 2nd transmission resource, it means that the usage situation of the 2nd to 4th transmission resources among the 4 transmission resources is "used or available", while the usage situation of the 1st transmission resource is "not used or unavailable or reserved".

Method 2.5: The first part indicates a starting transmission resource and an ending transmission resource. The transmission resources included from this starting transmission resource to this ending transmission resource are all not used or unavailable or reserved.

The starting transmission resource indicated by the first part can be any transmission resource among the M

**EP 4 783 692 A1**

transmission resources. The ending transmission resource indicated by the first part can be any transmission resource among the M transmission resources. Additionally, the first part may directly indicate the position of the ending transmission resource, or it may indicate the duration (or quantity) of consecutive transmission resources, so that the ending transmission resource can be determined by combining the starting transmission resource and this duration. Using this Method 2.5 indication method can indicate that the usage situation of consecutive transmission resources from the starting transmission resource to the ending transmission resource is all "not used or unavailable or reserved".

It is assumed that M=4, including 4 transmission resources in total. If the first part indicates the starting transmission resource as the 1st transmission resource and the ending transmission resource as the 4th transmission resource, it means that the usage situation of all 4 transmission resources is "not used or unavailable or reserved". or if the first part indicates the starting transmission resource as the 2nd transmission resource and the ending transmission resource as the 3rd transmission resource, it means that the usage situation of the 2nd to 3rd transmission resources among the 4 transmission resources is "not used or unavailable or reserved", while the usage situation of the 1st and 4th transmission resources is "used or available".

Method 2.6: The first part indicates a starting transmission resource and an ending transmission resource. The transmission resources included from this starting transmission resource to this ending transmission resource are all used or available.

The starting transmission resource indicated by the first part can be any transmission resource among the M transmission resources. The ending transmission resource indicated by the first part can be any transmission resource among the M transmission resources. Additionally, the first part may directly indicate the position of the ending transmission resource, or it may indicate the duration (or quantity) of consecutive transmission resources, so that the ending transmission resource can be determined by combining the starting transmission resource and this duration. Using this Method 2.6 indication method can indicate that the usage situation of consecutive transmission resources from the starting transmission resource to the ending transmission resource is all "used or available".

It is assumed that M=4, including 4 transmission resources in total. If the first part indicates the starting transmission resource as the 1st transmission resource and the ending transmission resource as the 4th transmission resource, it means that the usage situation of all 4 transmission resources is "used or available". or if the first part indicates the starting transmission resource as the 2nd transmission resource and the ending transmission resource as the 3rd transmission resource, it means that the usage situation of the 2nd to 3rd transmission resources among the 4 transmission resources is "used or available", while the usage situation of the 1st and 4th transmission resources is "not used or unavailable or reserved".

Below, several possible implementations of the second part are explained.

Method 3.1: The second part includes N bits. There are one-to-one correspondences between the N bits and the N resource parts. Each bit among the N bits is used to indicate the usage situation of one resource part among the N resource parts.

This indication method of using N bits to indicate the usage situation of N resource parts can be called a bitmap indication method. Each of the N bits corresponds to one resource part among the aforementioned N resource parts and is used to indicate the usage situation of that one resource part. For example, the j-th bit among the N bits corresponds to the j-th resource part among the aforementioned N resource parts. The j-th bit is used to indicate the usage situation of the j-th resource part, where j is a positive integer less than or equal to N. In some embodiments, the usage situation of the j-th resource part may be that the j-th resource part is not used or unavailable or reserved, or that the j-th resource part is used or available.

In some embodiments, for each bit among the aforementioned N bits, when its value is a first value, it indicates that the resource part corresponding to this bit is not used or unavailable or reserved; when its value is a second value, it indicates that the resource part corresponding to this bit is used or available. The aforementioned first value and second value can be two different values. For example, the first value is 1 and the second value is 0, or the first value is 0 and the second value is 1.

Using the aforementioned bitmap indication method to indicate the usage situation of resource parts has high flexibility, but the bit overhead of the signaling is relatively large.

Method 3.2: The second part includes H bits. The H bits are used to indicate $2^H$ types of usage situations regarding the N resource parts, where H is a positive integer.

In some embodiments, for the $2^H$ types of usage situations regarding the N resource parts, each type of usage situation regarding the N resource parts has a corresponding index. The aforementioned H bits can be used to indicate the index of a certain type of usage situation regarding the N resource parts.

In some embodiments, each type of usage situation regarding the N resource parts and its corresponding index may be pre-configured by the network device or agreed by protocol. It is assumed that the first transmission resource includes 4 resource parts, and the second information corresponding to the first transmission resource includes 3 bits. The 3 bits can indicate up to $2^3=8$ types of usage situations regarding these 4 resource parts.

Using the aforementioned index-based indication method to indicate the usage situation of resource parts can support non-contiguous indications. The flexibility is somewhat limited compared to Method 3.1 above, but the bit overhead can be somewhat saved compared to Method 3.1 above.

Method 3.3: The second part indicates a starting resource part. From this starting resource part to the ending resource part of the N resource parts, all are not used or unavailable or reserved.

The starting resource part indicated by the second part can be any resource part among the N resource parts included in the first transmission resource. The ending resource part of the N resource parts refers to the last resource part among the N resource parts. Using this Method 3.3 indication method can indicate that the usage situation of consecutive resource parts starting from the starting resource part is all "not used or unavailable or reserved".

Method 3.4: The second part indicates a starting resource part. From this starting resource part to the ending resource part of the N resource parts, all are used or available.

The starting resource part indicated by the second part can be any resource part among the N resource parts included in the first transmission resource. The ending resource part of the N resource parts refers to the last resource part among the N resource parts. Using this Method 3.4 indication method can indicate that the usage situation of consecutive resource parts starting from the starting resource part is all "used or available".

Method 3.5: The second part indicates a starting resource part and an ending resource part. The resource parts included from this starting resource part to this ending resource part are all not used or unavailable or reserved.

The starting resource part indicated by the second part can be any resource part among the N resource parts included in the first transmission resource. The ending resource part indicated by the second part can be any resource part among the N resource parts included in the first transmission resource. Additionally, the second part may directly indicate the position of the ending resource part, or it may indicate the duration (or quantity) of consecutive resource parts, so that the ending resource part can be determined by combining the starting resource part and this duration. Using this Method 3.5 indication method can indicate that the usage situation of consecutive resource parts from the starting resource part to the ending resource part is all "not used or unavailable or reserved".

Method 3.6: The second part indicates a starting resource part and an ending resource part. The resource parts included from this starting resource part to this ending resource part are all used or available.

The starting resource part indicated by the second part can be any resource part among the N resource parts included in the first transmission resource. The ending resource part indicated by the second part can be any resource part among the N resource parts included in the first transmission resource. Additionally, the second part may directly indicate the position of the ending resource part, or it may indicate the duration (or quantity) of consecutive resource parts, so that the ending resource part can be determined by combining the starting resource part and this duration. Using this Method 3.6 indication method can indicate that the usage situation of consecutive resource parts from the starting resource part to the ending resource part is all "used or available".

Method 3.7: The second part includes N-1 bits. There are one-to-one correspondences between the N-1 bits the first N-1 resource parts among the N resource parts. Each bit among the N-1 bits is used to indicate the usage situation of one resource part among the first N-1 resource parts.

The first N-1 resource parts among the N resource parts may be the first N-1 resource parts in a sequence obtained by sorting the N resource parts according to their indices or other information. Each of the N-1 bits corresponds to one resource part among the aforementioned first N-1 resource parts and is used to indicate the usage situation of that one resource part.

In some embodiments, for each bit among the aforementioned N-1 bits, when its value is a first value, it indicates that the resource part corresponding to this bit is not used or unavailable or reserved; when its value is a second value, it indicates that the resource part corresponding to this bit is used or available. The aforementioned first value and second value can be two different values. For example, the first value is 1 and the second value is 0, or the first value is 0 and the second value is 1.

In some embodiments, if the N-1 bits included in the second part indicate that the first N-1 resource parts among the N resource parts included in the first transmission resource are all used or available, and since the first transmission resource is indicated as not used or unavailable or reserved in the first part, it can be inferred and determined that the last resource part among the N resource parts is not used or unavailable or reserved.

This Method 3.7 can further save the bit overhead required for the second part compared to Method 3.1.

Furthermore, the methods corresponding to the first part, Methods 2.1 to 2.6, can be combined arbitrarily with the methods corresponding to the second part, Methods 3.1 to 3.7. For example, the first information includes a first part and a second part, the first part is represented using Method 2.1 above, and the second part is represented using Method 3.1 above. For another example, the first information includes a first part and a second part, the first part is represented using Method 2.1 above, and the second part is represented using Method 3.7 above.

Below, the determination methods for the first transmission resource are explained.

Method 4.1: The first transmission resource is the first transmission resource among the M transmission resources that is indicated as not used or unavailable or reserved.

For example, M=6. Among these 6 transmission resources, the usage situation of the 1st and 2nd transmission resources is used or available, and the usage situation of the 3rd to 6th transmission resources is not used or unavailable or reserved. Then, the first transmission resource is the 3rd transmission resource among the aforementioned 6 transmission resources.

Using this Method 4.1, the number of first transmission resources is 1. This first transmission resource is the first transmission resource among the M transmission resources that is indicated as not used or unavailable or reserved. Based on the first part included in the first information, this first transmission resource can be determined. Then, combined with the second part included in the first information, the usage situation of the N resource parts included in this first transmission resource can be further determined. The basis for this method is the assumption that the actual usage situation of transmission resources is continuous, and only the first transmission resource that is not used or unavailable or reserved can be partially occupied.

Method 4.2: The number of first transmission resources is R. The R first transmission resources are the first R transmission resources among the M transmission resources that are indicated as not used or unavailable or reserved, where R is an integer greater than 1.

For example, M=6. Among these 6 transmission resources, the usage situation of the 1st, 3rd, and 5th transmission resources is used or available, and the usage situation of the 2nd, 4th, and 6th transmission resources is not used or unavailable or reserved. It is assumed that R=2, then the first transmission resources are the 2nd transmission resource and the 4th transmission resource among the aforementioned 6 transmission resources.

Using this Method 4.2, the number of first transmission resources is multiple. These R first transmission resources are the first R transmission resources among the M transmission resources that are indicated as not used or unavailable or reserved. Based on the first part included in the first information, these R first transmission resources can be determined. Then, combined with the second part included in the first information, the usage situation of the N resource parts included in each of the R first transmission resources can be further determined. This method is more flexible than Method 4.1, but requires more bit overhead.

Method 4.3: The previous transmission resource of the first transmission resource is indicated as used or available in the first part.

For example, M=4. Among these 4 transmission resources, the usage situation of the 1st and 3rd transmission resources is used or available, and the usage situation of the 2nd and 4th transmission resources is not used or unavailable or reserved. Then, the first transmission resources are the 2nd and 4th transmission resources among the aforementioned 6 transmission resources.

Using this Method 4.3, the first transmission resource is the transmission resource among the M transmission resources where the usage changes from used or available to not used or unavailable or reserved. Based on the first part included in the first information, one or more first transmission resources can be determined. Then, combined with the second part included in the first information, the usage situation of the N resource parts included in each first transmission resource can be further determined. This method can support the indication of usage in transmission scenarios using non-contiguous transmission resources.

Method 4.4: The number of first transmission resources is S. The S first transmission resources are the first S transmission resources among the M transmission resources that are indicated as not used or unavailable or reserved and whose previous transmission resource is indicated as used or available in the first part, where S is an integer greater than or equal to 1.

For example, M=6. Among these 6 transmission resources, the usage situation of the 1st and 3rd transmission resources is used or available, and the usage situation of the 2nd and 4th to 6th transmission resources is not used or unavailable or reserved. It is assumed that S=1, then the first transmission resource is the 2nd transmission resource among the aforementioned 6 transmission resources. It is assumed that S=2, then the first transmission resources are the 2nd transmission resource and the 4th transmission resource among the aforementioned 6 transmission resources.

Method 4.4 is essentially a combination of Method 4.2 and Method 4.3. This method can support the indication of usage in transmission scenarios using non-contiguous transmission resources and has good flexibility.

Furthermore, the determination methods for the first transmission resource mentioned above, Methods 4.1 to 4.4, can be arbitrarily combined with the methods corresponding to the first part, Methods 2.1 to 2.6, and the methods corresponding to the second part, Methods 3.1 to 3.7, as introduced above. Below, several possible combination schemes will be introduced through a few embodiments.

In some embodiments, the first information includes a first part and a second part. The first part includes D bits, used to indicate the usage situation of the M transmission resources. The second part includes $W \times E$ bits, where W is the number of first transmission resources, each first transmission resource corresponds to E bits, used to indicate the usage situation of the N resource parts included in that first transmission resource. W is a positive integer less than or equal to M, and E is a positive integer. Thus, the number of bits A included in the first information is $A = D + W \times E$.

The first part can use any one of Methods 2.1 to 2.6 introduced above to indicate the usage situation of the M transmission resources. When the first part uses Method 2.1 above, D = M. When the first part uses Methods 2.2 to 2.6 above, D can be less than M, and the value of D can be configured by the network device or agreed by protocol.

The second part can use any one of Methods 3.1 to 3.7 introduced above to indicate the usage situation of the resource parts included in the W first transmission resources. For example, the second part can use Method 3.1 introduced above, using a bitmap method to indicate the usage situation of the resource parts included in the first transmission resource.

The first transmission resource can be determined using any one of Methods 4.1 to 4.4 introduced above. For example, W=1, and the first transmission resource is determined using Method 4.1 above. The first transmission resource is the first transmission resource among the M transmission resources that is indicated as not used or unavailable or reserved.

In an example, when combining Method 2.1, Method 3.1, and Method 4.1 above, it is assumed that each transmission resource includes 2 resource parts, D = M = 6, W = 1, E = 2, A = 6 + 1 × 2 = 8. As shown in Table 3 below, among the 8 bits included in this first information, the first 6 bits (i.e., bits numbered 0 to 5 in Table 3) are used to indicate the usage situation of the 6 transmission resources, where 0 represents used or available, and 1 represents not used or unavailable or reserved. The last 2 bits (i.e., bits numbered 6 to 7 in Table 3) are used to indicate the usage situation of the 2 resource parts included in the first transmission resource indicated as not used or unavailable or reserved (i.e., the 3rd transmission resource), where 0 represents used or available, and 1 represents not used or unavailable or reserved. The basis for this method is the assumption that the actual usage situation of transmission resources is continuous, and only the first transmission resource that is not used or unavailable or reserved can be partially occupied. As shown in Table 3, the usage situation of the 1st and 2nd transmission resources is used or available, the usage situation of the 3rd to 6th transmission resources is not used or unavailable or reserved, and among them, the 3rd transmission resource is partially occupied. The usage situation of the 1st resource part of the 3rd transmission resource is used or available, and the usage situation of the 2nd resource part is not used or unavailable or reserved.

Table 3

| Bits 0 to 7 | M = 6 transmission resources | | | | | | W = 1 first transmission resource | |
|---|---|---|---|---|---|---|---|---|
| | 0 | 1 | 2 | 3 | 4 | 5 | 6 | 7 |
| Value of bit | 0 | 0 | 1 | 1 | 1 | 1 | 0 | 1 |

In an example, when combining Method 2.1, Method 3.1, and Method 4.4 above, it is assumed that each transmission resource includes 2 resource parts, D = M = 4, W = 2, E = 2, A = 4 + 2 × 2 = 8. As shown in Table 4 below, among the 8 bits included in this first information, the first 4 bits (i.e., bits numbered 0 to 3 in Table 4) are used to indicate the usage situation of the 4 transmission resources, where 0 represents used or available, and 1 represents not used or unavailable or reserved. The last 4 bits (i.e., bits numbered 4 to 7 in Table 4) are used to indicate the usage situation of the 2 resource parts included in each of up to 2 transmission resources indicated as not used or unavailable or reserved, where 0 represents used or available, and 1 represents not used or unavailable or reserved. Exemplarily, the last 4 bits are used to indicate the first 2 transmission resources where a transition occurs. The aforementioned transmission resource where a transition occurs refers to a transmission resource whose own usage state is not used or unavailable or reserved and whose previous transmission resource is indicated as used or available in the first part.

In the example shown in Table 4, among the first 4 bits (i.e., bits numbered 0 to 3 in Table 4), there are 2 bits indicating 2 transmission resources where a transition occurs, namely the 2nd and 4th transmission resources. According to the following 4 bits (i.e., bits numbered 4 to 7 in Table 4), it can be known that the usage situation of both resource parts in the 2nd transmission resource is not used or unavailable or reserved, and the usage situation of the 1st resource part of the 4th transmission resource is used or available, and the usage situation of the 2nd resource part is not used or unavailable or reserved.

In the example shown in Table 5, among the first 4 bits (i.e., bits numbered 0 to 3 in Table 5), there is only 1 bit indicating 1 transmission resource where a transition occurs, namely the 2nd transmission resource. Among the following 4 bits (i.e., bits numbered 4 to 7 in Table 5), bits 4 and 5 further indicate the usage situation of the resource parts included in this 2nd transmission resource, and bits 6 and 7 have no valid indication and can be set as placeholder information.

Table 4

| Bits 0 to 7 | M = 4 transmission resources | | | | W = 2 transmission resources | | | |
|---|---|---|---|---|---|---|---|---|
| | 0 | 1 | 2 | 3 | 4 | 5 | 6 | 7 |
| Value of bit | 0 | 1 | 0 | 1 | 1 | 1 | 0 | 1 |

Table 5

| Bits 0 to 7 | M = 4 transmission resources | | | | W = 2 transmission resources | | | |
|---|---|---|---|---|---|---|---|---|
| | 0 | 1 | 2 | 3 | 4 | 5 | 6 | 7 |
| Value of bit | 0 | 1 | 1 | 1 | 1 | 1 | - | - |

In the examples of Table 4 and Table 5 above, if the number of transmission resources where a transition occurs is greater than 2, then precise indication at the resource part level is not performed for other transmission resources where a transition occurs beyond the first 2. This method can support transmission scenarios using non-contiguous resources.

In some embodiments, the first information includes a first part and a second part. The first part uses Method 2.1 above. The first part includes M bits, used to indicate the usage situation of the M transmission resources. The second part uses Method 3.7 above, including $W \times (N-1)$ bits. W is the number of first transmission resources. Each first transmission resource corresponds to N-1 bits, used to indicate the usage situation of the first N-1 resource parts among the N resource parts included in that first transmission resource. W is a positive integer less than or equal to M, and N is an integer greater than 1. Thus, the number of bits A included in the first information is $A = M + W \times (N-1)$.

The first transmission resource can be determined using any one of Methods 4.1 to 4.4 introduced above. For example, W=1, and the first transmission resource is determined using Method 4.1 above. The first transmission resource is the first transmission resource among the M transmission resources that is indicated as not used or unavailable or reserved.

In an example, when combining Method 2.1, Method 3.7, and Method 4.1 above, it is assumed that each transmission resource includes 3 resource parts (i.e., N=3), M=6, W=1, $A = 6 + 1 \times (3-1) = 8$. As shown in Table 3 above, among the 8 bits included in this first information, the first 6 bits (i.e., bits numbered 0 to 5 in Table 3) are used to indicate the usage situation of the 6 transmission resources, where 0 represents used or available, and 1 represents not used or unavailable or reserved. The last 2 bits (i.e., bits numbered 6 to 7 in Table 3) are used to indicate the usage situation of the first 2 resource parts among the 3 resource parts included in the first transmission resource indicated as not used or unavailable or reserved (i.e., the 3rd transmission resource), where 0 represents used or available, and 1 represents not used or unavailable or reserved. The basis for this method is the assumption that the actual usage situation of transmission resources is continuous, and only the first transmission resource that is not used or unavailable or reserved can be partially occupied, and the occupation preferentially occupies resource parts with lower indices. As shown in Table 3, the usage situation of the 1st and 2nd transmission resources is used or available, the usage situation of the 3rd to 6th transmission resources is not used or unavailable or reserved, and among them, the 3rd transmission resource is partially occupied. The usage situation of the 1st resource part of the 3rd transmission resource is used or available, and the usage situation of the 2nd resource part is not used or unavailable or reserved (from which it can be further inferred that the usage situation of the 3rd resource part in the 3rd transmission resource is not used or unavailable or reserved).

In an example, when combining Method 2.1, Method 3.7, and Method 4.4 above, it is assumed that each transmission resource includes 3 resource parts (i.e., N=3), M=4, W=2, $A = 4 + 2 \times (3-1) = 8$. As shown in Table 4 above, among the 8 bits included in this first information, the first 4 bits (i.e., bits numbered 0 to 3 in Table 4) are used to indicate the usage situation of the 4 transmission resources, where 0 represents used or available, and 1 represents not used or unavailable or reserved. The last 4 bits (i.e., bits numbered 4 to 7 in Table 4) are used to indicate the usage situation of the first 2 resource parts among the 3 resource parts included in each of up to 2 transmission resources indicated as not used or unavailable or reserved, where 0 represents used or available, and 1 represents not used or unavailable or reserved. Exemplarily, the last 4 bits are used to indicate the first 2 transmission resources where a transition occurs. The aforementioned transmission resource where a transition occurs refers to a transmission resource whose own usage state is not used or unavailable or reserved and whose previous transmission resource is indicated as used or available in the first part.

In the example shown in Table 4, among the first 4 bits (i.e., bits numbered 0 to 3 in Table 4), there are 2 bits indicating 2 transmission resources where a transition occurs, namely the 2nd and 4th transmission resources. According to the following 4 bits (i.e., bits numbered 4 to 7 in Table 4), it can be known that the usage situation of the first 2 resource parts in the 2nd transmission resource is not used or unavailable or reserved (from which it can be further inferred that the usage situation of all 3 resource parts in the 2nd transmission resource is not used or unavailable or reserved), and the usage situation of the 1st resource part of the 4th transmission resource is used or available, and the usage situation of the 2nd resource part is not used or unavailable or reserved (from which it can be further inferred that the usage situation of the 3rd resource part in the 4th transmission resource is not used or unavailable or reserved).

The basis for this method is the assumption that the actual usage situation of transmission resources is continuous, and only the first transmission resource that is not used or unavailable or reserved can be partially occupied, and the occupation preferentially occupies resource parts with lower indices. Moreover, this method can support transmission scenarios using non-contiguous resources.

Below, the amount of data transmitted when using resource parts for transmission is explained. Taking the first transmission resource as an example, it is assumed that the first transmission resource includes N resource parts, and X resource parts among them are used for data transmission, where X is a positive integer less than or equal to N.

In some embodiments, when using X resource parts among the N resource parts included in the first transmission resource for data transmission, the amount of data transmitted is determined based on a first parameter. The first parameter includes N, X, and T, where T is the preconfigured amount of data to be transmitted in the first transmission resource. In some embodiments, T is the preconfigured TBS (Transport Block Size) to be transmitted in the first transmission resource. In some embodiments, the aforementioned amount of data transmitted is related to $\frac{X}{N} \times T$.

For example, when $\frac{X}{N} \times T$ is an integer, the aforementioned amount of data transmitted is $\frac{X}{N} \times T$; when $\frac{X}{N} \times T$ is not an integer, the aforementioned amount of data transmitted may be the rounded result of $\frac{X}{N} \times T$, such as the rounded-up result or the rounded-down result. In some embodiments, the unit of the aforementioned amount of data transmitted is bits.

In some embodiments, when using X resource parts among the N resource parts included in the first transmission resource for data transmission, the amount of data transmitted is determined based on a second parameter. The second parameter includes r, Qm, and Z, where r is the coding rate, Qm is the modulation order, and Z is the number of physical resources or available physical resources or remaining physical resources after removing overhead included in the X resource parts. In some embodiments, the aforementioned amount of data transmitted is related to r × Qm × Z. For example, when r × Qm × Z is an integer, the aforementioned amount of data transmitted is r × Qm × Z; when r × Qm × Z is not an integer, the aforementioned amount of data transmitted may be the rounded result of r × Qm × Z, such as the rounded-up result or the rounded-down result. In some embodiments, the unit of the aforementioned amount of data transmitted is bits. Through the above method, the amount of data for this transmission is determined based on the number of physical resources included in the X resource parts.

By using the above two methods to determine the amount of data transmitted by the resource parts, each resource part can be fully utilized, avoiding padding redundant bits, which helps improve transmission efficiency.

The technical solutions provided by the embodiments of the present disclosure indicate the usage situation of the N resource parts included in the first transmission resource among the M transmission resources through the first information. The transmission resource is divided into finer granularity. The transmission resource can include multiple resource parts, each resource part including a portion of the resources in the transmission resource, thereby achieving a finer-grained indication of resource usage, which helps improve resource utilization.

Below, possible application scenarios of the technical solutions of the present disclosure are introduced and explained.

In some embodiments, taking the application of the technical solutions of the present disclosure in a 5G NR system as an example.

NR uplink supports semi-static periodic transmission, i.e., configured grant PUSCH transmission, specifically including the following two types:

type-1 CG (Type 1 Configured Grant): After RRC configures transmission parameters, it takes effect without needing DCI activation;
type-2 CG (Type 2 Configured Grant): After RRC configures transmission parameters, it takes effect after DCI activation.

CG supports symbol-level periods of 2 symbols/7 symbols, and slot-level periods of {1,2,4,5,8,10,16,20,32,40...}. In some implementation schemes of the NR system, one PUSCH is transmitted within one CG period (i.e., there is only one PUSCH occasion). In other implementation schemes of the NR system, one UE can be configured with multiple CG configurations simultaneously. Various parameters of different CG configurations are configured independently. The UE determines the corresponding CG PUSCH transmission resources for each CG configuration.

The characteristics of XR (Extended Reality) data include: variable packet size and large average value. Taking AR (Augmented Reality)/VR (Virtual Reality) with a data rate of 100Mbps as an example, the average uplink data packet size is 20833 bytes, the maximum value is 31250 bytes, and the minimum value is 10417 bytes. That is, the size of the data packet to be transmitted in each period is in the range [10417 bytes, 31250 bytes]. In an actual system with 100M bandwidth, transmitting a data packet of 20833 bytes approximately requires occupying transmission resources in 4 slots.

Currently, 3GPP (3rd Generation Partnership Project) has determined support for configuring multiple PUSCH occasions within one CG period for transmitting XR large data packets. Alternatively, multiple sets of CG can be configured to transmit XR large data packets. When the amount of data for a certain data transmission is relatively small and does not require occupying the pre-configured multiple PUSCH transmission occasions (TO), the UE can notify the base station of the unused PUSCH TOs. The base station can reallocate the unused PUSCH TOs to other UEs for data transmission, thereby improving system efficiency. Specifically, the UE can send UTO-UCI in the transmitted CG PUSCH. The UTO-UCI indicates, via a bitmap, whether the N available CG PUSCH TOs after the current CG PUSCH TO are unused. The value of N is configured by higher layer signaling. When the corresponding bit indicates unused, the UE cannot send PUSCH in the corresponding TO; otherwise, the UE may (but is not required to) send PUSCH in the corresponding TO.

Currently, in the NR system, the indication granularity of UTO-UCI is the TO. Such a coarse indication precision can cause significant resource waste. For example, as shown in FIG. 6, the base station pre-configures 4 TOs. The valid data in the current period only needs to occupy the physical resources in 2.5 TOs to satisfy the transmission. However, due to the limitation of UTO-UCI indication, the UE needs to use 3 TOs for transmission. To fill the 3 TOs, the higher layer, when generating the PDU (Protocol Data Unit), needs to add padding bits in addition to the valid data for placeholder, resulting in system resource waste and UE power consumption waste.

If the technical solution provided by the present disclosure is adopted, the transmission resources of PUSCH are divided into finer granularity, divided into multiple resource parts, and the usage is indicated at the resource part level, which can reduce system resource waste and save UE power consumption.

In some embodiments, taking the application of the technical solutions of the present disclosure in a 6G system as an example.

Communication systems typically support two data transmission methods:

In a first data transmission method, the terminal receives downlink control signaling sent by the base station and receives or sends data based on the parameters in the downlink control signaling. This scheduling method is usually called dynamic scheduling. The advantage of dynamic scheduling is that the scheduler determines transmission parameters based on real-time traffic volume and physical channel conditions, resulting in high transmission efficiency. The processing delay of the terminal includes demodulating the downlink control signaling and demodulating the downlink data or preparing the uplink data.

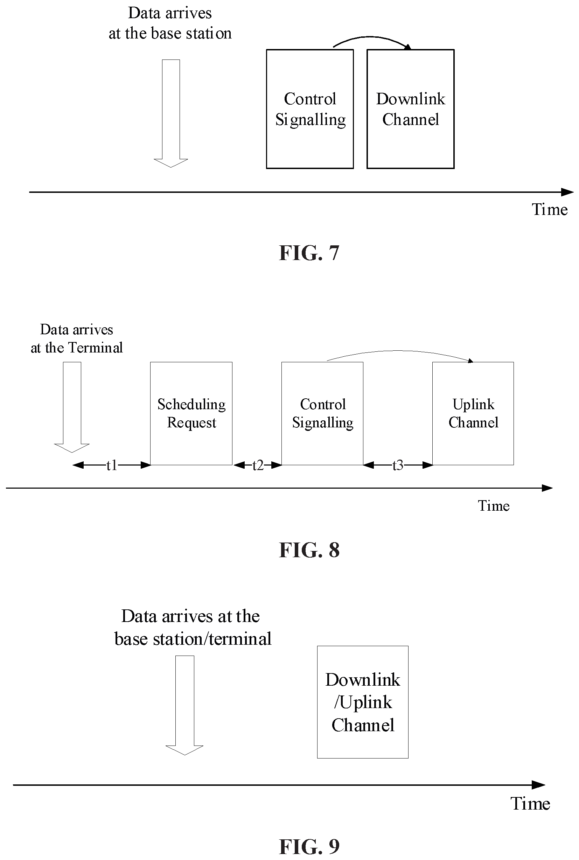

Downlink data: As shown in FIG. 7, downlink data arrives at the base station, and the base station sends control signaling to schedule the downlink channel to transmit the downlink data. The control signaling can be transmitted in the same scheduling time unit (slot, subframe, subslot, etc.) as the downlink channel. The time between data arrival and channel transmission must meet necessary processing time requirements.

Uplink data: As shown in FIG. 8, uplink data arrives at the terminal, and the terminal sends scheduling request information (SR, BRS) to the base station, i.e., informs the base station that there is data to send. The base station sends control signaling to schedule the uplink channel to transmit the uplink data. Both base station and terminal transmissions need to meet necessary processing time.

In a second data transmission method, the terminal receives higher layer signaling (RRC) sent by the base station and receives or sends data based on the parameters in the higher layer signaling. In LTE and NR systems, downlink transmission is called semi-persistent scheduling (SPS) PDSCH. Uplink transmission in the NR system is called configured grant (CG) PUSCH. For data that arrives periodically, has constant traffic volume, and has stable transmission conditions (e.g., no fast movement), using semi-persistent scheduling can reduce downlink control signaling overhead in the system and simplify receiver processing. For uplink transmission, using semi-persistent scheduling can significantly reduce transmission delay.

For URLLC (Ultra-Reliable Low-Latency Communications) services in some industrial control scenarios, the latency requirement is extremely high, for example, reaching 0.1ms. However, their data arrival does not have periodic characteristics or has significant jitter on top of the period, making it impossible to use the existing semi-persistent scheduling mechanism. If based on the existing dynamic scheduling mechanism, the latency requirement may not be met. Furthermore, for services with single large data volume transmission (i.e., data arriving at one time requires multiple scheduling time units or scheduling frequency domain units for transmission), there is also the disadvantage of large control signaling overhead.

In 6G systems, network devices can predict data arrival situations based on more advanced scheduling algorithms, such as AI (Artificial Intelligence). For example, based on a certain user's personal characteristics, predict the data arrival situation of that user. Specifically, different game players have personal characteristics in their response methods when playing the same game, and the corresponding uplink and downlink data arrival and data volume are also different. After the base station predicts the data, it can schedule in advance, reducing physical layer processing time. For example, it can directly omit t1 and t2 in FIG. 8, becoming the situation shown in FIG. 9. There is bound to be a certain difference between the prediction result and the actual result. For example, data arrival is predicted, and the data volume is large. But in reality, there is no data, or the data volume is small. At this time, in order to improve system transmission efficiency, the pre-scheduled resources based on prediction should be released quickly.

If the technical solution provided by the present disclosure is adopted, the downlink/uplink transmission resources are divided into finer granularity, divided into multiple resource parts, and the usage is indicated at the resource part level, which can reduce system resource waste and improve system transmission efficiency.

The following are apparatus embodiments of the present disclosure, which can be used to execute the method embodiments of the present disclosure. For details not disclosed in the apparatus embodiments of the present disclosure, reference is made to the method embodiments of the present disclosure.

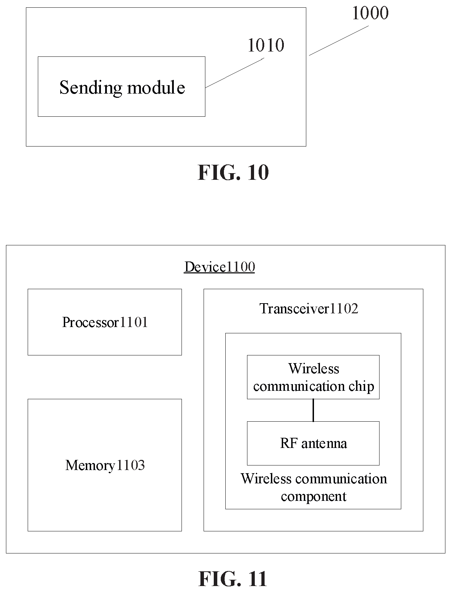

Reference is made to FIG. 10, which shows a block diagram of a device for resource indication provided by an embodiment of the present disclosure. The apparatus has the function of implementing the above method for resource indication. The function can be implemented by hardware or by hardware executing corresponding software. The apparatus can be the first device introduced above or can be disposed in the first device. The first device can be a terminal device or a network device. As shown in FIG. 10, the apparatus 1000 may include: a sending module 1010.

The sending module 1010 is configured to send first information. The first information is used to indicate the usage situation of N resource parts included in a first transmission resource among M transmission resources. N is an integer greater than 1, M is an integer greater than or equal to 1, and the first transmission resource is configured for transmitting a first channel.

In some embodiments, the first information includes M groups of second information. There are one-to-one correspondences between the M groups of second information and the M transmission resources. Each group of second information among the M groups of second information is used to indicate the usage situation of one transmission resource among the M transmission resources.

In some embodiments, the group of second information corresponding to the first transmission resource among the M groups of second information includes N bits. There are one-to-one correspondences between the N bits and the N resource parts. Each bit among the N bits is used to indicate the usage situation of one resource part among the N resource parts; or

the group of second information corresponding to the first transmission resource among the M groups of second information includes L bits. The L bits are used to indicate $2^L$ types of usage situations regarding the N resource parts, where L is a positive integer; or

the group of second information corresponding to the first transmission resource among the M groups of second information indicates a starting resource part. From this starting resource part to the ending resource part of the N resource parts, all are not used or unavailable or reserved; or

the group of second information corresponding to the first transmission resource among the M groups of second information indicates a starting resource part. From this starting resource part to the ending resource part of the N resource parts, all are used or available; or

the group of second information corresponding to the first transmission resource among the M groups of second information indicates a starting resource part and an ending resource part. The resource parts included from this starting resource part to this ending resource part are all not used or unavailable or reserved; or

the group of second information corresponding to the first transmission resource among the M groups of second information indicates a starting resource part and an ending resource part. The resource parts included from this starting resource part to this ending resource part are all used or available.

In some embodiments, the first information includes a first part and a second part. The first part is used to indicate the usage situation of the M transmission resources. The second part is used to indicate the usage situation of the N resource parts included in the first transmission resource. The first transmission resource is indicated as not used or unavailable or reserved in the first part.

In some embodiments, the first part includes M bits. There are one-to-one correspondences between the M bits and the M transmission resources. Each bit among the M bits is used to indicate the usage situation of one transmission resource among the M transmission resources; or

the first part includes K bits. The K bits are used to indicate $2^K$ types of usage situations regarding the M transmission resources, where K is a positive integer; or

the first part indicates a starting transmission resource. From this starting transmission resource to the ending transmission resource of the M transmission resources, all are not used or unavailable or reserved; or

the first part indicates a starting transmission resource. From this starting transmission resource to the ending transmission resource of the M transmission resources, all are used or available; or

the first part indicates a starting transmission resource and an ending transmission resource. The transmission resources included from this starting transmission resource to this ending transmission resource are all not used or unavailable or reserved; or

the first part indicates a starting transmission resource and an ending transmission resource. The transmission resources included from this starting transmission resource to this ending transmission resource are all used or available.

In some embodiments, the second part includes N bits. There are one-to-one correspondences between the N bits and the N resource parts. Each bit among the N bits is used to indicate the usage situation of one resource part among the N resource parts; or

the second part includes H bits. The H bits are used to indicate $2^H$ types of usage situations regarding the N resource parts, where H is a positive integer; or

the second part indicates a starting resource part. From this starting resource part to the ending resource part of the N resource parts, all are not used or unavailable or reserved; or

the second part indicates a starting resource part. From this starting resource part to the ending resource part of the N resource parts, all are used or available; or

the second part indicates a starting resource part and an ending resource part. The resource parts included from this starting resource part to this ending resource part are all not used or unavailable or reserved; or

the second part indicates a starting resource part and an ending resource part. The resource parts included from this starting resource part to this ending resource part are all used or available; or

the second part includes N-1 bits. There are one-to-one correspondences between the N-1 bits the first N-1 resource parts among the N resource parts. Each bit among the N-1 bits is used to indicate the usage situation of one resource part among the first N-1 resource parts.

In some embodiments, the first transmission resource is the first transmission resource among the M transmission resources that is indicated as not used or unavailable or reserved; or

the number of first transmission resources is R. The R first transmission resources are the first R transmission resources among the M transmission resources that are indicated as not used or unavailable or reserved, where R is an integer greater than 1; or

the previous transmission resource of the first transmission resource is indicated as used or available in the first part; or

the number of first transmission resources is S. The S first transmission resources are the first S transmission resources among the M transmission resources that are indicated as not used or unavailable or reserved and whose previous transmission resource is indicated as used or available in the first part, where S is an integer greater than or equal to 1.

In some embodiments, the M transmission resources are periodic resources configured by a network device through first signaling; or the M transmission resources are resources indicated by a network device through second signaling.

In some embodiments, the M transmission resources are after the transmission resource in which the first information is located.

In some embodiments, the first device is a terminal device, and the M transmission resources are uplink transmission resources; or the first device is a network device, and the M transmission resources are downlink transmission resources.

In some embodiments, the first transmission resource is divided into P time domain units in the time domain and Q frequency domain units in the frequency domain, where P and Q are both positive integers;

For any resource part included in the first transmission resource:

in the time domain, it includes part of the P time domain units, and in the frequency domain, it includes the Q frequency domain units; or

in the time domain, it includes the P time domain units, and in the frequency domain, it includes part of the Q frequency domain units; or

in the time domain, it includes part of the P time domain units, and in the frequency domain, it includes part of the Q frequency domain units.

In some embodiments, the part of the time domain units and/or the part of the frequency domain units are divided according to an agreed rule; or the part of the time domain units and/or the part of the frequency domain units are configured by a network device.

In some embodiments, the part of the time domain units are continuous in the time domain, and/or the part of the frequency domain units are continuous in the frequency domain.

In some embodiments, for the case where the resource part includes part of the P time domain units in the time domain, the number of time domain units included in the resource part is determined based on P and N.

In some embodiments, among the N resource parts, there are C resource parts that include $\left\lceil \dfrac{P}{N} \right\rceil$ time domain

units in the time domain, and N-C resource parts that include $\left\lfloor \dfrac{P}{N} \right\rfloor$ time domain units in the time domain, where C = mod(P, N).

In some embodiments, for the case where the resource part includes part of the Q frequency domain units in the frequency domain, the number of frequency domain units included in the resource part is determined based on Q and N.

In some embodiments, among the N resource parts, there are D resource parts that include $\left\lceil \dfrac{Q}{N} \right\rceil$ frequency domain units in the frequency domain, and N-D resource parts that include $\left\lfloor \dfrac{Q}{N} \right\rfloor$ frequency domain units in the frequency domain, where D = mod(Q, N).

In some embodiments, when using X resource parts among the N resource parts included in the first transmission resource for data transmission, the amount of data transmitted is determined based on a first parameter. The first parameter includes N, X, and T, where T is the preconfigured amount of data to be transmitted in the first transmission resource, and X is a positive integer less than or equal to N.

In some embodiments, the amount of data transmitted is related to $\dfrac{X}{N} \times T$.

In some embodiments, when using X resource parts among the N resource parts included in the first transmission resource for data transmission, the amount of data transmitted is determined based on a second parameter. The second parameter includes r, Qm, and Z, where r is the coding rate, Qm is the modulation order, Z is the number of physical resources or available physical resources or remaining physical resources after removing overhead included in the X resource parts, and X is a positive integer less than or equal to N.

In some embodiments, the amount of data transmitted is related to r × Qm × Z.

The technical solutions provided by the embodiments of the present disclosure indicate the usage situation of the N resource parts included in the first transmission resource among the M transmission resources through the first information. The transmission resource is divided into finer granularity. The transmission resource can include multiple resource parts, each resource part including a portion of the resources in the transmission resource, thereby achieving a finer-grained indication of resource usage, which helps improve resource utilization.

It should be noted that when the apparatus provided in the above embodiment implements its functions, the division of the above functional modules is only used as an example for illustration. In practical applications, the above functions may be allocated to different functional modules for completion as needed, that is, the internal structure of the device is divided into different functional modules to complete all or part of the functions described above.

Regarding the apparatus in the above embodiments, the specific manner in which each module performs operations has been described in detail in the embodiments related to the method, and will not be explained in detail here. For details not explained in detail in the apparatus embodiments, reference may be made to the above method embodiments.

Reference is made to FIG. 11, which shows a schematic structural diagram of a device provided by an embodiment of the present disclosure. The device can be the first device described above, such as a terminal device or a network device. The device 1100 may include: a processor 1101, a transceiver 1102, and a memory 1103. The processor 1101 is used to implement various processing functions of the device 1100, such as generating information to be sent, parsing received information, controlling sending and/or receiving, etc. The transceiver 1102 is used to implement sending and/or receiving functions, such as implementing the function of the sending module 1010 described above.

The processor 1101 includes one or more processing cores. The processor 1101 executes software programs and modules to perform various functional applications and information processing.

The transceiver 1102 may include a receiver and a transmitter. For example, the receiver and transmitter may be implemented as one wireless communication component, which may include a wireless communication chip and a radio frequency antenna.

The memory 1103 may be connected to the processor 1101 and the transceiver 1102.

The memory 1103 may be used to store computer programs executed by the processor. The processor 1101 is used to execute the computer programs to implement the various steps in the above method embodiments.

In some embodiments, the transceiver 1102 is configured to send first information. The first information is used to indicate the usage situation of N resource parts included in a first transmission resource among M transmission resources. N is an integer greater than 1, M is an integer greater than or equal to 1, and the first transmission resource is configured for transmitting a first channel.

For details not described in detail in this embodiment, reference may be made to the above embodiments, which will not be repeated here.

In addition, the memory may be implemented by any type of volatile or non-volatile storage device or a combination thereof. The volatile or non-volatile storage device includes, but is not limited to: magnetic disks or optical disks, EEPROM (Electrically Erasable Programmable Read-Only Memory), EPROM (Erasable Programmable Read Only Memory), SRAM (Static Random Access Memory), ROM (Read-Only Memory), magnetic memory, flash memory, PROM (Programmable Read-Only Memory).

The embodiments of the present disclosure also provide a computer-readable storage medium. Computer programs are stored in the storage medium, and the computer programs are configured to be executed by a processor to implement the above method for resource indication. In some embodiments, the computer-readable storage medium may include: ROM (Read-Only Memory), RAM (Random-Access Memory), SSD (Solid State Drives), or optical discs, etc. The random access memory may include ReRAM (Resistance Random Access Memory) and DRAM (Dynamic Random Access Memory).

The embodiments of the present disclosure also provide a chip. The chip includes a programmable logic circuit and/or program instructions, which, when the chip runs, are used to implement the above method for resource indication.

The embodiments of the present disclosure also provide a computer program product. The computer program product includes a computer program stored in a computer-readable storage medium. A processor reads and executes the computer program from the computer-readable storage medium to implement the above method for resource indication.

It should be understood that "indication" mentioned in the embodiments of the present disclosure may be direct indication, indirect indication, or may represent an associative relationship. For example, A indicating B may mean that A directly indicates B, for example, B can be obtained through A; it may also mean that A indirectly indicates B, for example, A indicates C, and B can be obtained through C; it may also mean that there is an associative relationship between A and B.

In the description of the embodiments of the present disclosure, the term "corresponding" may indicate a direct corresponding or indirect corresponding relationship between the two, may also indicate an associative relationship between the two, or may indicate a relationship of indicating and being indicated, configuring and being configured, etc.

In some embodiments of the present disclosure, "predefined" can be implemented by pre-storing corresponding codes, tables, or other methods that can be used to indicate relevant information in the device (e.g., including terminal devices and network devices). The present disclosure does not limit its specific implementation method. For example, predefined may refer to defined in the protocol.

In some embodiments of the present disclosure, the "protocol" may refer to a standard protocol in the field of communications, for example, it may include LTE protocol, NR protocol, and related protocols applied in future communication systems, which is not limited in the present disclosure.

"Multiple" as mentioned herein means two or more. "And/or" describes the association relationship of associated objects, indicating that there can be three relationships. For example, A and/or B can indicate: A exists alone, A and B exist at the same time, and B exists alone. The character "/" generally indicates that the associated objects are in an "or" relationship.

"Greater than or equal to" as mentioned herein may mean greater than or equal to, or greater than; "less than or equal to" may mean less than or equal to, or less than.

In addition, the step numbers described in this article only exemplarily show a possible execution sequence between steps. In some other embodiments, the above steps may also not be executed in the order of numbers. For example, two steps with different numbers may be executed simultaneously, or two steps with different numbers may be executed in the opposite order to the illustration. The embodiments of the present disclosure do not limit this.

Those skilled in the art should realize that in the above one or more examples, the functions described in the embodiments of the present disclosure can be implemented by hardware, software, firmware, or any combination thereof. When implemented by software, these functions can be stored in a computer-readable medium or transmitted as one or more instructions or codes on a computer-readable medium. Computer-readable media includes both computer storage media and communication media, where communication media includes any medium that facilitates the transfer of a computer program from one place to another. A storage medium may be any available medium that can be accessed by a general-purpose or special-purpose computer.

The above are only exemplary embodiments of the present disclosure and are not intended to limit the present disclosure. Any modifications, equivalent replacements, improvements, etc., made within the spirit and principles of the present disclosure shall be included in the protection scope of the present disclosure.

**Claims**

1. A method for resource indication, the method being performed by a first device and comprising:
   sending first information, wherein the first information is used to indicate usage situation of N resource parts comprised in a first transmission resource among M transmission resources, N is an integer greater than 1, M is an integer greater than or equal to 1, and the first transmission resource is configured for transmitting a first channel.

2. The method according to claim 1, wherein the first information comprises M groups of second information, there are one-to-one correspondences between the M groups of second information and the M transmission resources, and each group of second information among the M groups of second information is used to indicate usage situation of one transmission resource among the M transmission resources.

3. The method according to claim 2, wherein

a group of second information corresponding to the first transmission resource among the M groups of second information comprises N bits, there are one-to-one correspondences between the N bits and the N resource parts, and each bit among the N bits is used to indicate usage situation of one resource part among the N resource parts; or

the group of second information corresponding to the first transmission resource among the M groups of second information comprises L bits, the L bits are used to indicate $2^L$ types of usage situations regarding the N resource parts, and L is a positive integer; or

the group of second information corresponding to the first transmission resource among the M groups of second information indicates a starting resource part, and all resource parts from the starting resource part to an ending resource part of the N resource parts are not used or unavailable or reserved; or

the group of second information corresponding to the first transmission resource among the M groups of second information indicates a starting resource part, and all resource parts from the starting resource part to the ending resource part of the N resource parts are used or available; or

the group of second information corresponding to the first transmission resource among the M groups of second information indicates a starting resource part and an ending resource part, and all resource parts comprised from the starting resource part to the ending resource part are not used or unavailable or reserved; or

the group of second information corresponding to the first transmission resource among the M groups of second information indicates a starting resource part and an ending resource part, and all resource parts comprised from the starting resource part to the ending resource part are used or available.

4. The method according to claim 1, wherein the first information comprises a first part and a second part, the first part is used to indicate usage situation of the M transmission resources, the second part is used to indicate usage situation of the N resource parts comprised in the first transmission resource, and the first transmission resource is indicated as not used or unavailable or reserved in the first part.

5. The method according to claim 4, wherein

the first part comprises M bits, there are one-to-one correspondences between the M bits and the M transmission resources, and each bit among the M bits is used to indicate the usage situation of one transmission resource among the M transmission resources; or

the first part comprises K bits, the K bits are used to indicate $2^K$ types of usage situations regarding the M transmission resources, and K is a positive integer; or

the first part indicates a starting transmission resource, and all transmission resources from the starting transmission resource to an ending transmission resource of the M transmission resources are not used or unavailable or reserved; or

the first part indicates a starting transmission resource, and all transmission resources from the starting transmission resource to the ending transmission resource of the M transmission resources are used or available; or

the first part indicates a starting transmission resource and an ending transmission resource, and all transmission resources comprised from the starting transmission resource to the ending transmission resource are not used or unavailable or reserved; or

the first part indicates a starting transmission resource and an ending transmission resource, and all transmission resources comprised from the starting transmission resource to the ending transmission resource are used or available.

6. The method according to claim 4 or 5, wherein

the second part comprises N bits, there are one-to-one correspondences between the N bits and the N resource parts, and each bit among the N bits is used to indicate the usage situation of one resource part among the N resource parts; or

the second part comprises H bits, the H bits are used to indicate $2^H$ types of usage situations regarding the N resource parts, and H is a positive integer; or

the second part indicates a starting resource part, and all resource parts from the starting resource part to an ending resource part of the N resource parts are not used or unavailable or reserved; or
the second part indicates a starting resource part, and all resource parts from the starting resource part to the ending resource part of the N resource parts are used or available; or
the second part indicates a starting resource part and an ending resource part, and all resource parts comprised from the starting resource part to the ending resource part are not used or unavailable or reserved; or
the second part indicates a starting resource part and an ending resource part, and all resource parts comprised from the starting resource part to the ending resource part are used or available; or
the second part comprises N-1 bits, there are one-to-one correspondences between the N-1 bits the first N-1 resource parts among the N resource parts, and each bit among the N-1 bits is used to indicate the usage situation of one resource part among the first N-1 resource parts.

7. The method according to any one of claims 4 to 6, wherein

the first transmission resource is the first transmission resource among the M transmission resources that is indicated as not used or unavailable or reserved; or
a number of first transmission resources is R, the R first transmission resources are the first R transmission resources among the M transmission resources that are indicated as not used or unavailable or reserved, and R is an integer greater than 1; or
a previous transmission resource of the first transmission resource is indicated as used or available in the first part; or
a number of first transmission resources is S, the S first transmission resources are the first S transmission resources among the M transmission resources that are indicated as not used or unavailable or reserved and whose previous transmission resource is indicated as used or available in the first part, and S is an integer greater than or equal to 1.

8. The method according to any one of claims 1 to 7, wherein

the M transmission resources are periodic resources configured by a network device through first signaling; or
the M transmission resources are resources indicated by a network device through second signaling.

9. The method according to any one of claims 1 to 8, wherein the M transmission resources are after the transmission resource in which the first information is located.

10. The method according to any one of claims 1 to 9, wherein

the first device is a terminal device, and the M transmission resources are uplink transmission resources; or
the first device is a network device, and the M transmission resources are downlink transmission resources.

11. The method according to any one of claims 1 to 10, wherein the first transmission resource is divided into P time domain units in time domain and Q frequency domain units in frequency domain, and P and Q are both positive integers;
for any resource part comprised in the first transmission resource:

in the time domain, the resource part comprises part of the P time domain units, and in the frequency domain, the resource part comprises the Q frequency domain units; or
in the time domain, the resource part comprises the P time domain units, and in the frequency domain, the resource part comprises part of the Q frequency domain units; or
in the time domain, the resource part comprises part of the P time domain units, and in the frequency domain, the resource part comprises part of the Q frequency domain units.

12. The method according to claim 11, wherein

the part of the time domain units and/or the part of the frequency domain units are divided according to an agreed rule; or
the part of the time domain units and/or the part of the frequency domain units are configured by a network device.

13. The method according to claim 11 or 12, wherein the part of the time domain units are continuous in the time domain, and/or the part of the frequency domain units are continuous in the frequency domain.

14. The method according to any one of claims 11 to 13, wherein for the case where the resource part comprises part of the P time domain units in the time domain, a number of time domain units comprised in the resource part is determined according to P and N.

15. The method according to claim 14, wherein among the N resource parts, there are C resource parts that comprise $\left\lceil\frac{P}{N}\right\rceil$ time domain units in the time domain, and N-C resource parts that comprise $\left\lfloor\frac{P}{N}\right\rfloor$ time domain units in the time domain, and C = mod(P, N).

16. The method according to any one of claims 11 to 15, wherein for the case where the resource part comprises part of the Q frequency domain units in the frequency domain, a number of frequency domain units comprised in the resource part is determined according to Q and N.

17. The method according to claim 16, wherein among the N resource parts, there are D resource parts that comprise $\left\lceil\frac{Q}{N}\right\rceil$ frequency domain units in the frequency domain, and N-D resource parts that comprise $\left\lfloor\frac{Q}{N}\right\rfloor$ frequency domain units in the frequency domain, and D = mod(Q, N).

18. The method according to any one of claims 1 to 17, wherein when using X resource parts among the N resource parts comprised in the first transmission resource for data transmission, an amount of data transmitted is determined according to a first parameter, wherein the first parameter comprises N, X, and T, T is a preconfigured amount of data to be transmitted in the first transmission resource, and X is a positive integer less than or equal to N.

19. The method according to claim 18, wherein the amount of data transmitted is related to $\frac{X}{N}\times T$.

20. The method according to any one of claims 1 to 17, wherein when using X resource parts among the N resource parts comprised in the first transmission resource for data transmission, an amount of data transmitted is determined based on a second parameter, where the second parameter comprises r, Qm, and Z, r is the coding rate, Qm is a modulation order, Z is a number of physical resources comprised in the X resource parts, or a number of available physical resources, or a number of remaining physical resources after removing overhead, and X is a positive integer less than or equal to N.

21. The method according to claim 20, wherein the amount of data transmitted is related to r × Qm × Z.

22. A device for resource indication, the device being configured in a first device and comprising:
a sending module configured to send first information, wherein the first information is used to indicate usage situation of N resource parts comprised in a first transmission resource among M transmission resources, N is an integer greater than 1, M is an integer greater than or equal to 1, and the first transmission resource is configured for transmitting a first channel.

23. The device according to claim 22, wherein the first information comprises M groups of second information, there are one-to-one correspondences between the M groups of second information and the M transmission resources, and each group of second information among the M groups of second information is used to indicate usage situation of one transmission resource among the M transmission resources.

24. The device according to claim 23, wherein

a group of second information corresponding to the first transmission resource among the M groups of second information comprises N bits, there are one-to-one correspondences between the N bits and the N resource parts, and each bit among the N bits is used to indicate usage situation of one resource part among the N resource parts; or
the group of second information corresponding to the first transmission resource among the M groups of second information comprises L bits, the L bits are used to indicate $2^L$ types of usage situations regarding the N resource parts, and L is a positive integer; or

the group of second information corresponding to the first transmission resource among the M groups of second information indicates a starting resource part, and all resource parts from the starting resource part to an ending resource part of the N resource parts are not used or unavailable or reserved; or

the group of second information corresponding to the first transmission resource among the M groups of second information indicates a starting resource part, and all resource parts from the starting resource part to the ending resource part of the N resource parts are used or available; or

the group of second information corresponding to the first transmission resource among the M groups of second information indicates a starting resource part and an ending resource part, and all resource parts comprised from the starting resource part to the ending resource part are not used or unavailable or reserved; or

the group of second information corresponding to the first transmission resource among the M groups of second information indicates a starting resource part and an ending resource part, and all resource parts comprised from the starting resource part to the ending resource part are used or available.

25. The device according to claim 22, wherein the first information comprises a first part and a second part, the first part is used to indicate usage situation of the M transmission resources, the second part is used to indicate usage situation of the N resource parts comprised in the first transmission resource, and the first transmission resource is indicated as not used or unavailable or reserved in the first part.

26. The device according to claim 25, wherein

the first part comprises M bits, there are one-to-one correspondences between the M bits and the M transmission resources, and each bit among the M bits is used to indicate the usage situation of one transmission resource among the M transmission resources; or

the first part comprises K bits, the K bits are used to indicate $2^K$ types of usage situations regarding the M transmission resources, and K is a positive integer; or

the first part indicates a starting transmission resource, and all transmission resources from the starting transmission resource to an ending transmission resource of the M transmission resources are not used or unavailable or reserved; or

the first part indicates a starting transmission resource, and all transmission resources from the starting transmission resource to the ending transmission resource of the M transmission resources are used or available; or

the first part indicates a starting transmission resource and an ending transmission resource, and all transmission resources comprised from the starting transmission resource to the ending transmission resource are not used or unavailable or reserved; or

the first part indicates a starting transmission resource and an ending transmission resource, and all transmission resources comprised from the starting transmission resource to the ending transmission resource are used or available.

27. The device according to claim 25 or 26, wherein

the second part comprises N bits, there are one-to-one correspondences between the N bits and the N resource parts, and each bit among the N bits is used to indicate the usage situation of one resource part among the N resource parts; or

the second part comprises H bits, the H bits are used to indicate $2^H$ types of usage situations regarding the N resource parts, and H is a positive integer; or

the second part indicates a starting resource part, and all resource parts from the starting resource part to an ending resource part of the N resource parts are not used or unavailable or reserved; or

the second part indicates a starting resource part, and all resource parts from the starting resource part to the ending resource part of the N resource parts are used or available; or

the second part indicates a starting resource part and an ending resource part, and all resource parts comprised from the starting resource part to the ending resource part are not used or unavailable or reserved; or

the second part indicates a starting resource part and an ending resource part, and all resource parts comprised from the starting resource part to the ending resource part are used or available; or

the second part comprises N-1 bits, there are one-to-one correspondences between the N-1 bits the first N-1 resource parts among the N resource parts, and each bit among the N-1 bits is used to indicate the usage situation of one resource part among the first N-1 resource parts.

**28.** The device according to any one of claims 25 to 27, wherein

the first transmission resource is the first transmission resource among the M transmission resources that is indicated as not used or unavailable or reserved; or
a number of first transmission resources is R, the R first transmission resources are the first R transmission resources among the M transmission resources that are indicated as not used or unavailable or reserved, and R is an integer greater than 1; or
a previous transmission resource of the first transmission resource is indicated as used or available in the first part; or
a number of first transmission resources is S, the S first transmission resources are the first S transmission resources among the M transmission resources that are indicated as not used or unavailable or reserved and whose previous transmission resource is indicated as used or available in the first part, and S is an integer greater than or equal to 1.

**29.** The device according to any one of claims 22 to 28, wherein

the M transmission resources are periodic resources configured by a network device through first signaling; or
the M transmission resources are resources indicated by a network device through second signaling.

**30.** The device according to any one of claims 22 to 29, wherein the M transmission resources are after the transmission resource in which the first information is located.

**31.** The device according to any one of claims 22 to 30, wherein

the first device is a terminal device, and the M transmission resources are uplink transmission resources; or
the first device is a network device, and the M transmission resources are downlink transmission resources.

**32.** The method according to any one of claims 22 to 31, wherein the first transmission resource is divided into P time domain units in time domain and Q frequency domain units in frequency domain, and P and Q are both positive integers;
for any resource part comprised in the first transmission resource:

in the time domain, the resource part comprises part of the P time domain units, and in the frequency domain, the resource part comprises the Q frequency domain units; or
in the time domain, the resource part comprises the P time domain units, and in the frequency domain, the resource part comprises part of the Q frequency domain units; or
in the time domain, the resource part comprises part of the P time domain units, and in the frequency domain, the resource part comprises part of the Q frequency domain units.

**33.** The device according to claim 32, wherein

the part of the time domain units and/or the part of the frequency domain units are divided according to an agreed rule; or
the part of the time domain units and/or the part of the frequency domain units are configured by a network device.

**34.** The device according to claim 32 or 33, wherein the part of the time domain units are continuous in the time domain, and/or the part of the frequency domain units are continuous in the frequency domain.

**35.** The device according to any one of claims 32 to 34, wherein for the case where the resource part comprises part of the P time domain units in the time domain, a number of time domain units comprised in the resource part is determined according to P and N.

**36.** The device according to claim 35, wherein among the N resource parts, there are C resource parts that comprise $\left\lceil \frac{P}{N} \right\rceil$ time domain units in the time domain, and N-C resource parts that comprise $\left\lfloor \frac{P}{N} \right\rfloor$ time domain units in the time domain, and C = mod(P, *N).*

37. The device according to any one of claims 32 to 36, wherein for the case where the resource part comprises part of the Q frequency domain units in the frequency domain, a number of frequency domain units comprised in the resource part is determined according to Q and N.

38. The device according to claim 37, wherein among the N resource parts, there are D resource parts that comprise $\left\lceil\frac{Q}{N}\right\rceil$ frequency domain units in the frequency domain, and N-D resource parts that comprise $\left\lfloor\frac{Q}{N}\right\rfloor$ frequency domain units in the frequency domain, and D = mod(Q, $N$).

39. The device according to any one of claims 22 to 38, wherein when using X resource parts among the N resource parts comprised in the first transmission resource for data transmission, an amount of data transmitted is determined according to a first parameter, wherein the first parameter comprises N, X, and T, T is a preconfigured amount of data to be transmitted in the first transmission resource, and X is a positive integer less than or equal to N.

40. The device according to claim 39, wherein the amount of data transmitted is related to $\frac{X}{N}\times T$ .

41. The device according to any one of claims 22 to 38, wherein when using X resource parts among the N resource parts comprised in the first transmission resource for data transmission, an amount of data transmitted is determined based on a second parameter, where the second parameter comprises r, Qm, and Z, r is the coding rate, Qm is a modulation order, Z is a number of physical resources comprised in the X resource parts, or a number of available physical resources, or a number of remaining physical resources after removing overhead, and X is a positive integer less than or equal to N.

42. The device according to claim 41, wherein the amount of data transmitted is related to r $\times$ Qm $\times$ Z.

43. A device, wherein the device comprises a processor and a memory, a computer program are stored in the memory, and the processor executes the computer program to implement the method according to any one of claims 1 to 21.

44. A computer-readable storage medium, wherein a computer program are stored in the storage medium, and the computer program are configured to be executed by a processor to implement the method according to any one of claims 1 to 21.

45. A chip, wherein the chip comprises programmable logic circuits and/or program instructions, that when the chip runs, are used to implement the method according to any one of claims 1 to 21.

46. A computer program product, wherein the computer program product comprises computer instructions stored in a computer-readable storage medium, and a processor reads the computer instructions from the computer-readable storage medium and executes the computer instructions to implement the method according to any one of claims 1 to 21.

Network
Architecture100

30

Core
Network

30

Access
Network

20

20

10

**FIG. 1**

A first device sends first information, the first information is used to indicate the usage of N resource parts included in a first transmission resource among M transmission resources, where N is an integer greater than 1, M is an integer greater than or equal to 1, and the first transmission resource is configured for transmitting a first channel

210

**FIG. 2**

**FIG. 3**

**FIG.4**

RB

Q=4 RBs

P=14 symbols

**FIG. 5**

| Transmission Opportunity1 | Transmission Opportunity2 | Transmission Opportunity3 | Transmission Opportunity4 |
|---|---|---|---|

P

**FIG. 6**

Data arrives
at the base station

Control
Signalling

Downlink
Channel

Time

**FIG. 7**

Data arrives
at the Terminal

Scheduling
Request

Control
Signalling

Uplink
Channel

←t1→ ←t2→ ←t3→

Time

**FIG. 8**

Data arrives at the
base station/terminal

Downlink
/Uplink
Channel

Time

**FIG. 9**

1000

1010

Sending module

**FIG. 10**

Device1100

Processor1101

Memory1103

Transceiver1102

Wireless
communication chip

RF antenna

Wireless communication
component

**FIG. 11**

## INTERNATIONAL SEARCH REPORT

| International application No. |
| --- |
| **PCT/CN2023/119501** |

### A. CLASSIFICATION OF SUBJECT MATTER

H04W 72/0446(2023.01)i

According to International Patent Classification (IPC) or to both national classification and IPC

### B. FIELDS SEARCHED

Minimum documentation searched (classification system followed by classification symbols)

    IPC: H04W

Documentation searched other than minimum documentation to the extent that such documents are included in the fields searched

Electronic data base consulted during the international search (name of data base and, where practicable, search terms used)

    CNTXT, WPABSC, ENTXTC, 3GPP, CNKI, IEEE: 资源, 指示, 索引, 部分, 使用, 占用, 可用, 比特, 起始, 开始, 结束, 时域, 频域, 时隙, 子帧, 符号, 频域, resource, indication, index, part, use, occupation, available, bit, start, beginning, end, domain, slot, subframe, symbol, frequency

### C. DOCUMENTS CONSIDERED TO BE RELEVANT

| Category* | Citation of document, with indication, where appropriate, of the relevant passages | Relevant to claim No. |
| --- | --- | --- |
| X | WO 2021237751 A1 (GUANGDONG OPPO MOBILE TELECOMMUNICATIONS CORP., LTD.) 02 December 2021 (2021-12-02)<br>description, page 4, line 35-page 6, line 15 | 1, 8-10, 22, 29-31, 43-46 |
| A | WO 2023134606 A1 (SPREADTRUM SEMICONDUCTOR (NANJING) CO., LTD.) 20 July 2023 (2023-07-20)<br>entire document | 1-46 |
| A | CN 109803410 A (ZTE CORP.) 24 May 2019 (2019-05-24)<br>entire document | 1-46 |
| A | CN 110999454 A (HUAWEI TECHNOLOGIES CO., LTD.) 10 April 2020 (2020-04-10)<br>entire document | 1-46 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 December 2023** | **18 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/119501**

| Patent document cited in search report | | | Publication date (day/month/year) | Patent family member(s) | | | Publication date (day/month/year) |
|---|---|---|---|---|---|---|---|
| WO | 2021237751 | A1 | 02 December 2021 | JP | 2023536384 | A | 25 August 2023 |
| | | | | EP | 4132156 | A1 | 08 February 2023 |
| | | | | EP | 4132156 | A4 | 18 October 2023 |
| | | | | KR | 20230017179 | A | 03 February 2023 |
| | | | | WO | 2021237860 | A1 | 02 December 2021 |
| | | | | US | 2023007682 | A1 | 05 January 2023 |
| WO | 2023134606 | A1 | 20 July 2023 | None | | | |
| CN | 109803410 | A | 24 May 2019 | KR | 20200088426 | A | 22 July 2020 |
| | | | | KR | 102507308 | B1 | 08 March 2023 |
| | | | | US | 2020389895 | A1 | 10 December 2020 |
| | | | | US | 11375502 | B2 | 28 June 2022 |
| | | | | WO | 2019096280 | A1 | 23 May 2019 |
| | | | | EP | 3713344 | A1 | 23 September 2020 |
| | | | | EP | 3713344 | A4 | 22 December 2021 |
| | | | | MX | 2020005159 | A | 06 November 2020 |
| | | | | JP | 2021503228 | A | 04 February 2021 |
| | | | | JP | 7040865 | B2 | 23 March 2022 |
| CN | 110999454 | A | 10 April 2020 | EP | 3661286 | A1 | 03 June 2020 |
| | | | | EP | 3661286 | A4 | 29 July 2020 |
| | | | | WO | 2019028842 | A1 | 14 February 2019 |
| | | | | US | 2020178233 | A1 | 04 June 2020 |
| | | | | US | 11770833 | B2 | 26 September 2023 |

Form PCT/ISA/210 (patent family annex) (July 2022)